# EUROPEAN PATENT APPLICATION

(11) **EP 4 642 150 A1**
(43) Date of publication of application: **29.10.2025**
(21) Application number: 23914435.5
(22) Date of filing: 27.11.2023
(51) Int. Cl.: H04W 76/27

(54) **COMMUNICATION METHOD AND APPARATUS**

(30) Priority: 06.01.2023 CN 202310020497; 10.02.2023 CN 202310154920; 07.04.2023 CN 202310394633
(71) Applicant: Huawei Technologies Co., Ltd., Shenzhen, Guangdong 518129 (CN)
(72) Inventor: ZHANG, Mengchen, Shenzhen, Guangdong 518129 (CN); AHLUWALIA, Jagdeep Singh, 80992 Munich (DE); WANG, Yan, Shenzhen, Guangdong 518129 (CN); YOU, Chunhua, Shenzhen, Guangdong 518129 (CN)
(74) Representative: Epping - Hermann - Fischer
(86) International application number: PCT/CN2023/134407
(87) International publication number: WO 2024/146301

(57) **Abstract**

This application relates to a communication method and apparatus. A first central unit control plane receives first information from a first central unit user plane in a process of small data transmission between a first access network device and a terminal device, where the first information is information related to a data size of downlink data of the terminal device. The first central unit control plane sends a first message based on the first information, where the first message indicates to direct the terminal device to a RRC connected state. The first central unit control plane and the first central unit user plane are located in the first access network device. According to the technical solutions in embodiments of this application, even in the small data transmission process, the first central unit control plane can learn of arrival of new downlink data, and therefore can determine whether to direct the terminal device to the RRC connected state. In this way, data transmission efficiency is improved.

## Description

### CROSS-REFERENCE TO RELATED APPLICATIONS

This application claims priorities to Chinese Patent Application No. 202310020497.2, filed with the China National Intellectual Property Administration on January 6, 2023 and entitled "SMALL DATA TRANSMISSION METHOD, TERMINAL DEVICE, NETWORK DEVICE, AND COMMUNICATION SYSTEM", to Chinese Patent Application No. 202310154920.8, filed with the China National Intellectual Property Administration on February 10, 2023 and entitled "COMMUNICATION METHOD AND APPARATUS", and to Chinese Patent Application No. 202310394633.4, filed with the China National Intellectual Property Administration on April 7, 2023 and entitled "COMMUNICATION METHOD AND APPARATUS", all of which are incorporated herein by reference in their entireties.

### TECHNICAL FIELD

This application relates to the field of communication technologies, and in particular, to a communication method and apparatus.

### BACKGROUND

In some scenarios, a data packet to be transmitted by a user equipment (user equipment, UE) in a radio resource control (radio resource control, RRC) non-connected state is usually small. In other words, the only small data (small data) is to be transmitted by the UE. Currently, it is specified that the UE can perform transmission of data only after entering a RRC connected (connected) state. Therefore, when the UE needs to perform transmission of only small data, signaling overheads needed for the UE to enter the RRC connected state from the RRC non-connected state may even be greater than transmission overheads of the small data, resulting in unnecessary power consumption and signaling overheads. Therefore, currently, a small data transmission (small data transmission, SDT) procedure is introduced, to support the UE in directly performing transmission of the small data without entering the RRC connected state.

Currently, a base station having a distributed architecture is available. The distributed base station includes a base station central unit (gNB-central unit, gNB-CU) and a base station distributed unit (gNB-distributed unit, gNB-DU). The gNB-CU may further include a gNB-CU-control plane (control plane, CP) and a gNB-CU-user plane (user plane, UP). For example, when the UE is in the RRC non-connected state, for example, in a RRC inactive state, if a core network has downlink data for the UE, the core network sends the downlink data to the base station. For the distributed base station, the core network may send the downlink data to the gNB-CU-UP.

### SUMMARY

Before a small data transmission process starts, there is downlink data of a UE arriving at a gNB-CU-UP. In the small data transmission procedure, there is still downlink data of the UE arriving at the gNB-CU-UP. If the newly arrived downlink data is large in size, the gNB-CU-CP should direct the UE in a RRC connected state. However, the gNB-CU-CP does not know the arrival of the downlink data, and naturally does not direct the UE in the RRC connected state either. Consequently, even if the data size of the newly arrived downlink data is large, the gNB-CU-CP still transmits the downlink data using a small data transmission procedure, resulting low data transmission efficiency.

To resolve the foregoing technical problem, embodiments of this application provide a communication method and apparatus, to improve data transmission efficiency of small data transmission.

According to a first aspect, a first communication method is provided. The method may be performed by a first communication apparatus, or may be performed by another device including a function of the first communication apparatus, or may be performed by a chip system (or a chip) or another functional module. The chip system or the functional module can implement the function of the first communication apparatus. For example, the chip system or the functional module is disposed in the first communication apparatus. For example, the first communication apparatus is a first central unit control plane. The first central unit control plane may be located in a first access network device. The first access network device may further include a first central unit user plane. Optionally, the first central unit control plane is, for example, a CU-CP (referred to as a first CU-CP) in the first access network device, and the first central unit user plane is, for example, a CU-UP (referred to as a first CU-UP) in the first access network device. The method includes: receiving first information from the first central unit user plane in a process of small data transmission between the first access network device and a terminal device, where the first information is information related to downlink data of the terminal device; and sending a first message based on the first information, where the first message indicates to direct the terminal device to a RRC connected state, where the first central unit control plane and the first central unit user plane are located in the first access network device.

In this embodiment of this application, in the small data transmission process, the first central unit control plane may receive the first information from the first central unit user plane. The first information is related to a data size of the downlink data of the terminal device. Therefore, the first central unit control plane may determine that new downlink data arrives. Therefore, the first central unit control plane may determine, based on this, whether to direct the terminal device to the RRC connected state. It can be learned that, according to the technical solution in this embodiment of this application, even in the small data transmission process, the first central unit control plane can learn of arrival of the new downlink data, and therefore can determine whether to direct the terminal device to the RRC connected state, to improve data transmission efficiency.

In an optional implementation, the downlink data includes downlink small data or downlink non-small data.

In an optional implementation, the downlink data includes the downlink small data. The first information indicates that a data size of the downlink small data is greater than or equal to a first threshold. The downlink small data includes downlink small data of all radio bearers of the terminal device for small data transmission, the first threshold is a data size threshold corresponding to the terminal device or the first threshold is a data size threshold shared by a plurality of terminal devices, and the terminal device is one of the plurality of terminal devices. Alternatively, the downlink small data includes downlink small data of a first radio bearer of the terminal device, the first threshold is a data size threshold corresponding to the first radio bearer, and the first radio bearer is used for small data transmission. Alternatively, the first information indicates a data size of the downlink small data. The first information may indicate that the data size of the downlink small data is greater than or equal to a first threshold. For example, if the data size of the downlink small data is greater than or equal to the first threshold, the first central unit user plane may send the first information to the first central unit control plane; or if the data size of the downlink small data is less than the first threshold, the first central unit user plane may not send the first information to the first central unit control plane. In this case, provided that the first central unit control plane receives the first information, the first central unit control plane can determine that the data size of the downlink small data is greater than or equal to the first threshold, to direct the terminal device to the RRC connected state without performing an additional determining process. This can simplify an implementation of the first central unit control plane.

Alternatively, the first information may indicate the data size of the downlink small data. Whether the terminal device needs to be directed to the RRC connected state may be further determined by the first central unit control plane. In this way, an implementation of the first central unit user plane can be simplified.

In an optional implementation, when the first information indicates the data size of the downlink small data, the method further includes: determining that the data size of the downlink small data is greater than or equal to a first threshold. The downlink small data includes downlink small data of all radio bearers of the terminal device for small data transmission, the first threshold is a data size threshold corresponding to the terminal device or the first threshold is a data size threshold shared by a plurality of terminal devices, and the terminal device is one of the plurality of terminal devices. Alternatively, the downlink small data includes downlink small data of a first radio bearer of the terminal device, the first threshold is a data size threshold corresponding to the first radio bearer, and the first radio bearer is used for small data transmission. If the first information indicates the data size of the downlink small data, the first central unit control plane may further determine a value relationship between the data size of the downlink small data and the first threshold. For example, if the data size of the downlink small data is greater than or equal to the first threshold, the terminal device may be directed to the RRC connected state; or if the data size of the downlink small data is less than the first threshold, the terminal device may not need to be directed to the RRC connected state.

In an optional implementation, the first threshold is included in an interface setup request message or an interface setup response message. The interface setup request message is used to request setup of a connection between the first central unit control plane and the first central unit user plane, and the interface setup response message is used to acknowledge the setup of the connection. The first threshold is the data size threshold shared by the plurality of terminal devices, and the terminal device is one of the plurality of terminal devices. Alternatively, the first threshold is included in a bearer context setup request message. The bearer context setup request message is used to request setup of a radio bearer context of the terminal device, and the first threshold is the data size threshold corresponding to the terminal device or the first radio bearer. The first threshold may be transferred to the first central unit user plane or the first central unit control plane through a plurality of different messages.

In an optional implementation, the downlink data includes the downlink non-small data. The first information indicates arrival of the downlink non-small data. The downlink non-small data includes downlink non-small data of all radio bearers of the terminal device for non-small data, or includes downlink non-small data of a second radio bearer of the terminal device, and the second radio bearer is used for non-small data transmission. If the downlink data includes the downlink non-small data, the first central unit user plane may send the first information to the first central unit control plane provided that the downlink non-small data arrives, without additionally performing a determining process.

In an optional implementation, the first information is included in a second message. The first information includes an identifier of at least one radio bearer of the terminal device and indicates a PDU session to notify list for small data transmission, and the at least one radio bearer is used for non-small data transmission. This is equivalent to a case in which the identifier of the radio bearer for non-small data transmission is included in an IE in which the PDU session to notify list for small data transmission is included, or the identifier of the radio bearer for non-small data transmission is included in the PDU session to notify list for small data transmission, so that the first central unit control plane can determine, based on that "the PDU session to notify list for small data transmission includes the identifier of the radio bearer for non-small data transmission", that downlink non-small data currently arrives. It can be learned that in this manner, the first information implicitly indicates arrival of the downlink non-small data.

According to a second aspect, a second communication method is provided. The method may be performed by a second communication apparatus, or may be performed by another device including a function of the second communication apparatus, or may be performed by a chip system (or a chip) or another functional module. The chip system or the functional module can implement the function of the second communication apparatus. For example, the chip system or the functional module is disposed in the second communication apparatus. The second communication apparatus is, for example, a first central unit user plane. The method includes: sending first information to a first central unit control plane in a process of small data transmission between a first access network device and a terminal device, where the first information is information related to downlink data of the terminal device, the first information is used by the first central unit control plane to determine whether to direct the terminal device to a RRC connected state, and the first central unit control plane and the first central unit user plane are located in the first access network device.

In an optional implementation, the downlink data includes downlink small data or downlink non-small data.

In an optional implementation, the downlink data includes the downlink small data. The first information indicates a data size of the downlink small data is greater than or equal to a first threshold. The downlink small data includes downlink small data of all radio bearers of the terminal device for small data transmission, the first threshold is a data size threshold corresponding to the terminal device or the first threshold is a data size threshold shared by a plurality of terminal devices, and the terminal device is one of the plurality of terminal devices. Alternatively, the downlink small data includes downlink small data of a first radio bearer of the terminal device, the first threshold is a data size threshold corresponding to the first radio bearer, and the first radio bearer is used for small data transmission. Alternatively, the first information indicates a data size of the downlink small data.

In an optional implementation, the first threshold is included in an interface setup request message or an interface setup response message. The interface setup request message is used to request setup of a connection between the first central unit control plane and the first central unit user plane, and the interface setup request response is used to acknowledge the setup of the connection. The first threshold is the data size threshold shared by the plurality of terminal devices, and the terminal device is one of the plurality of terminal devices. Alternatively, the first threshold is included in a bearer context setup request message. The bearer context setup request message is used to request setup of a radio bearer context of the terminal device, and the first threshold is the data size threshold corresponding to the terminal device or the first radio bearer.

In an optional implementation, the downlink data includes the downlink non-small data. The first information indicates arrival of the downlink non-small data. The downlink non-small data includes downlink non-small data of all radio bearers of the terminal device for non-small data, or includes downlink non-small data of a second radio bearer of the terminal device, and the second radio bearer is used for non-small data transmission.

In an optional implementation, the first information is included in a second message. The first information includes an identifier of at least one radio bearer of the terminal device and indicates a PDU session to notify list for small data transmission, and the at least one radio bearer is used for non-small data transmission.

For technical effects brought by the second aspect or the optional implementations, refer to the descriptions of the technical effects of the first aspect or the corresponding implementations.

According to a third aspect, a third communication method is provided. The method may be performed by a second communication apparatus, or may be performed by another device including a function of the second communication apparatus, or may be performed by a chip system (or a chip) or another functional module. The chip system or the functional module can implement the function of the second communication apparatus. For example, the chip system or the functional module is disposed in the second communication apparatus. The second communication apparatus is, for example, a first central unit user plane. The method includes: when detecting that downlink data arrives, sending information about a first data size to a first central unit control plane, where the first data size is a data size of the downlink data, and the first central unit user plane and the first central unit control plane are located in a first access network device. In this embodiment of this application, the first central unit user plane may determine, based on second information, whether to send downlink small data size information to the first central unit control plane. This is equivalent to a case in which the first central unit user plane determines, after performing measurement based on a corresponding factor, whether to send the downlink small data size information to the first central unit control plane. For example, when the first central unit control plane does not need the downlink small data size information, the downlink small data size information does not need to be sent. This reduces transmission processes of redundant information, and helps reduce power consumption of the access network device.

In an optional implementation, the method further includes: determining, based on second information, to send downlink small data size information to the first central unit control plane when detecting that downlink small data arrives. The first central unit user plane may send the information about the first data size to the first central unit control plane based on the second information, or may send the information autonomously without depending on the second information.

In an optional implementation, the method further includes: determining that the downlink data is downlink small data (or determining that the downlink data is corresponding to a radio bearer that is of the terminal device and that is used for small data transmission), where the first data size is a data size of the downlink small data. For example, if the downlink data is downlink data corresponding to the radio bearer that is of the terminal device and that is used for small data transmission, the first central unit user plane may determine that the downlink data is downlink small data. The process of determining whether the downlink data is downlink small data may be performed by the first central unit user plane, or may be performed by the first central unit control plane.

In an optional implementation, the second information is included in a third message, the third message is from the first central unit control plane, and the second information indicates the first central unit user plane to send size information of downlink small data when the first central unit user plane detects arrival of the downlink small data, or the second information includes a small data transmission configuration of the first central unit user plane. The second information may be explicit indication information, so that the indication is clear. Alternatively, the second information may alternatively be implicit indication information. For example, the first central unit user plane may determine, based on the configured small data transmission configuration, that the downlink small data size information may be sent to the first central unit control plane, so that signaling overheads caused by the second information can be reduced.

In an optional implementation, that the second information indicates the first central unit user plane to send size information of downlink small data when the first central unit user plane detects arrival of the downlink small data includes: If uplink small data transmission and downlink small data transmission share a radio bearer, the second information indicates the first central unit user plane to send size information of downlink small data when the first central unit user plane detects arrival of the downlink small data; or if a radio bearer used for uplink small data transmission is different from a radio bearer used for downlink small data transmission, the second information indicates the first central unit user plane to send size information of small data when the first central unit user plane detects arrival of downlink small data, where the size information of the small data includes the size information of the downlink small data. If uplink small data transmission and downlink small data transmission share an SDT RB, the first central unit user plane may not determine, based on an SDT RB configuration, whether there is a configuration related to the downlink small data transmission, and cannot determine whether a small data transmission procedure corresponding to the downlink small data is uplink or downlink. Therefore, the second information (or an event of sending or receiving the second information) may indicate the first central unit user plane to send the downlink small data size information. If an SDT RB used for uplink small data transmission is different from an SDT RB used for downlink small data transmission, the first central unit user plane may determine, based on an SDT RB configuration, whether there is a configuration related to the downlink small data transmission, and can determine that a small data transmission procedure corresponding to the downlink small data is a downlink small data transmission procedure. Therefore, the second information (or an event of sending or receiving the second information) may indicate the first central unit user plane to send the small data size information.

In an optional implementation, the second information is included in a third message, the third message is from the first central unit control plane, and the second information is a bearer context status change information element IE included in the third message, where a value of the bearer context status change information element IE is a first value. The bearer context status change IE may be an original IE in the third message. In this embodiment of this application, a status (or a value) of the IE may be extended, so that the IE can serve as the second information, and there is no need to add an IE to the third message to serve as the second information. This can reduce overheads of the third message.

In an optional implementation, the information about the first data size is included in a fourth message, where the fourth message further includes third information, the third information indicates a PDU session to notify list for small data transmission, and the third information is used by the first central unit control plane to map a QoS flow included in the PDU session to notify list to a radio bearer used for small data transmission; or the fourth message further indicates the first central unit control plane to map, to a radio bearer used for small data transmission, a QoS flow included in a PDU session to notify list included in the fourth message. For example, the fourth message is an existing message, and third information may be included in the existing message to indicate the PDU session to notify list for small data transmission, so that the first central unit control plane may clearly map, based on the third information, the QoS flow included in the PDU session to notify list for small data transmission to the radio bearer used for small data transmission. Alternatively, the fourth message may be a newly defined message, so that the first central unit control plane may clearly map, based on the fourth message, the QoS flow included in the PDU session to notify list included in the fourth message to the radio bearer used for small data transmission.

In an optional implementation, after sending the information about the first data size to the first central unit control plane, the method further includes: sending first indication information to the first central unit control plane, where the first indication information indicates to end the small data transmission. The downlink small data arrives at the first central unit user plane. Therefore, the first central unit user plane may be clear about when to end the small data transmission. In this case, the first central unit user plane may indicate the first central unit control plane to end the small data transmission, and the first central unit control plane may stop the small data transmission.

In an optional implementation, the first access network device is a base station, the first central unit user plane is a base station central unit user plane in the base station, and the first central unit control plane is a base station central unit control plane in the base station.

Optionally, the third aspect or the various optional implementations may be combined with the first aspect or the various optional implementations. For example, the third aspect or the various optional implementations may be used as implementations of the first aspect, or the first aspect or the various optional implementations may be used as implementations of the third aspect. According to a fourth aspect, a fourth communication method is provided. The method may be performed by a first communication apparatus, or may be performed by another device including a function of the first communication apparatus, or may be performed by a chip system (or a chip) or another functional module. The chip system or the functional module can implement the function of the first communication apparatus. For example, the chip system or the functional module is disposed in the first communication apparatus. The first communication apparatus is, for example, a first central unit control plane. The method includes: receiving information about a first data size from a first central unit user plane, where the first data size is a data size of downlink data, and the first central unit user plane and the first central unit control plane are located in a first access network device.

In an optional implementation, the method further includes: sending second information to the first central unit user plane.

In an optional implementation, the method further includes: determining that the downlink data is downlink small data (or determining that the downlink data is corresponding to a radio bearer of a terminal device for small data transmission), where the first data size is a data size of the downlink small data.

In an optional implementation, the second information is included in a third message, and the second information indicates the first central unit user plane to send size information of downlink small data when the first central unit user plane detects arrival of the downlink small data, or the second information includes a small data transmission configuration of the first central unit user plane.

In an optional implementation, that the second information indicates the first central unit user plane to send size information of downlink small data when the first central unit user plane detects arrival of the downlink small data includes: If uplink small data transmission and downlink small data transmission share a radio bearer, the second information indicates the first central unit user plane to send size information of downlink small data when the first central unit user plane detects arrival of the downlink small data; or if a radio bearer used for uplink small data transmission is different from a radio bearer used for downlink small data transmission, the second information indicates the first central unit user plane to send size information of small data when the first central unit user plane detects arrival of downlink small data, where the size information of the small data includes the size information of the downlink small data.

In an optional implementation, the second information is included in a third message, and the second information is a bearer context status change IE included in the third message, where a value of the bearer context status change IE is a first value.

In an optional implementation, the information about the first data size is included in a fourth message, and the method further includes: mapping, based on third information, a QoS flow included in a PDU session to notify list for small data transmission to a radio bearer used for small data transmission, where the third information is included in the fourth message, and the third information indicates the PDU session to notify list for small data transmission; or mapping, based on the fourth message, a QoS flow included in a PDU session to notify list included in the fourth message to a radio bearer used for small data transmission; or mapping, based on the information about the first data size, a QoS flow included in a PDU session to notify list to a radio bearer used for small data transmission.

In an optional implementation, after receiving the information about the first data size from the first central unit user plane, the method further includes: sending a paging message, where the paging message is used to page a terminal device.

In an optional implementation, after sending the paging message, the method further includes: receiving, from a first distributed unit in the first access network device, a RRC request message from the terminal device; and sending a fifth message to the first distributed unit, where the fifth message is used to request context setup of a radio bearer, and the radio bearer is a radio bearer of the terminal device for transmission of the downlink small data.

In an optional implementation, sending the paging message includes: sending the paging message to a second access network device, where the paging message is used by the second access network device to page the terminal device, and the paging message includes the information about the first data size or includes a downlink small data transmission indication.

In an optional implementation, after sending the paging message to the second access network device, the method further includes: receiving a sixth message from the second access network device, where the sixth message is used to request to obtain a context of the terminal device; and sending, to the second access network device, a partial or entire context of all radio bearers of the terminal device for small data transmission, or sending, to the second access network device, a partial or entire context of the radio bearer of the terminal device for transmission of the downlink small data. For example, if the terminal device moves to the second access network device, the first access network device may receive the sixth message from the second access network device, to request the context of the terminal device. The first access network device may send the entire context of the terminal device to the second access network device, or the first access network device may send, to the second access network device, an entire or partial context of the radio bearer of the terminal device for transmission of the downlink small data, so that transmission overheads can be reduced.

In an optional implementation, the second access network device and the first central unit control plane unit are located in a same RNA.

In an optional implementation, the method further includes: receiving first indication information from the first central unit user plane and/or a core network device, where the first indication information indicates to end the small data transmission, or indicates to stop data transmission. In this embodiment of this application, the first central unit user plane and/or the core network device may indicate the first central unit control plane to end the small data transmission. This is flexible. In an optional implementation, the first access network device is a base station, the first central unit user plane is a base station central unit user plane in the base station, and the first central unit control plane is a base station central unit control plane in the base station.

For technical effects brought by the fourth aspect or some optional implementations, refer to the descriptions of the technical effects of the third aspect or the corresponding implementations.

Optionally, the fourth aspect or the various optional implementations may be combined with the second aspect or the various optional implementations. For example, the fourth aspect or the various optional implementations may be used as implementations of the second aspect, or the second aspect or the various optional implementations may be used as implementations of the fourth aspect.

According to a fifth aspect, a fifth communication method is provided. The method may be performed by a third communication apparatus, or may be performed by another device including a function of the third communication apparatus, or may be performed by a chip system (or a chip) or another functional module. The chip system or the functional module can implement the function of the third communication apparatus. For example, the chip system or the functional module is disposed in the third communication apparatus. For example, the third communication apparatus is a second central unit control plane. The second central unit control plane may be located in a second access network device. The second access network device may further include a second central unit user plane. Optionally, the second central unit control plane is, for example, a CU-CP (referred to as a second CU-CP) in the second access network device, and the second central unit user plane is, for example, a CU-UP (referred to as a second CU-UP) in the second access network device. The second access network device is, for example, an access network device on which the terminal device camps after the terminal device moves. The method includes: receiving a paging message from a first access network device, where the paging message is used by the second central unit control plane to page a terminal device, the second central unit control plane is located in the second access network device, the paging message includes information about a first data size or includes a downlink small data transmission indication, and the first data size is a data size of downlink small data; and paging the terminal device.

In an optional implementation, the method further includes: receiving, from a second distributed unit, a RRC request message from the terminal device, where the second distributed unit is located in the second access network device; sending a sixth message to the first access network device, where the sixth message is used to request to obtain a context of the terminal device; and receiving, from the first access network device, a partial or entire context of all radio bearers of the terminal device for small data transmission, or a partial or entire context of a radio bearer of the terminal device for transmission of the downlink small data.

In an optional implementation, the method further includes: sending a fifth message to the second distributed unit, where the fifth message is used to request context setup of a radio bearer, and the radio bearer is a radio bearer of the terminal device for transmission of the downlink small data.

In an optional implementation, the method further includes: receiving first indication information from the second central unit user plane or a core network device, where the first indication information indicates to end the small data transmission, or indicates to stop data transmission, or indicates to stop the small data transmission, and the second central unit user plane is located in the second access network device.

For technical effects brought by the fifth aspect or some optional implementations, refer to the descriptions of the technical effects of the corresponding implementations of the third aspect and/or the fourth aspect.

According to a sixth aspect, a communication apparatus is provided. The communication apparatus may be the first communication apparatus according to any one of the first aspect to the fifth aspect. The communication apparatus has a function of the first communication apparatus. The communication apparatus is, for example, the first communication apparatus, a large device including the first communication apparatus, or a functional module in the first communication apparatus, for example, a baseband apparatus or a chip system. Optionally, the first communication apparatus is a first central unit control plane. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules. **In** an optional implementation, the transceiver unit (or the receiving unit) is configured to receive first information from a first central unit user plane in a process of small data transmission between a first access network device and a terminal device, where the first information is information related to downlink data of the terminal device. The transceiver unit (or the sending unit) is configured to send a first message based on the first information, where the first message indicates to direct the terminal device to a RRC connected state. The first communication apparatus and the first central unit user plane are located in the first access network device.

**In** an optional implementation, the transceiver unit (or the sending unit) is configured to send second information to the first central unit user plane. The transceiver unit (or the receiving unit) is configured to receive information about a first data size from the first central unit user plane, where the first data size is a data size of downlink small data. The first central unit user plane and the first central unit control plane are located in the first access network device.

**In** an optional implementation, the communication apparatus further includes a storage unit (sometimes also referred to as a storage module). The processing unit is configured to: be coupled to the storage unit, and execute a program or instructions in the storage unit, to cause the communication apparatus to perform a function of the first central unit control plane according to any one of the first aspect to the fifth aspect.

According to a seventh aspect, a communication apparatus is provided. The communication apparatus may be the second communication apparatus according to any one of the first aspect to the fifth aspect. The communication apparatus has a function of the second communication apparatus. The communication apparatus is, for example, the second communication apparatus, a large device including the second communication apparatus, or a functional module in the second communication apparatus, for example, a baseband apparatus or a chip system. Optionally, the second communication apparatus is a first central unit user plane. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the sixth aspect.

In an optional implementation, the transceiver unit (or the sending unit) is configured to send first information to a first central unit control plane in a process of small data transmission between a first access network device and a terminal device, where the first information is information related to downlink data of the terminal device, and the first information is used by the first central unit control plane to determine whether to direct the terminal device to a RRC connected state. The first central unit control plane and the first central unit user plane are located in the first access network device.

In an optional implementation, the processing unit is configured to determine, based on second information, to send downlink small data size information to the first central unit control plane when detecting that downlink small data arrives. The transceiver unit (or the sending unit) is configured to send information about a first data size to the first central unit control plane when (the second communication apparatus) detects that downlink small data arrives, where the first data size is a data size of the downlink small data. The first central unit user plane and the first central unit control plane are located in the first access network device.

In an optional implementation, the communication apparatus further includes a storage unit (sometimes also referred to as a storage module). The processing unit is configured to: be coupled to the storage unit, and execute a program or instructions in the storage unit, to cause the communication apparatus to perform a function of the first central unit user plane according to any one of the first aspect to the fifth aspect.

According to an eighth aspect, a communication apparatus is provided. The communication apparatus may be the third communication apparatus according to any one of the first aspect to the fifth aspect. The communication apparatus has a function of the third communication apparatus. The communication apparatus is, for example, the third communication apparatus, a large device including the third communication apparatus, or a functional module in the third communication apparatus, for example, a baseband apparatus or a chip system. Optionally, the third communication apparatus is a second central unit control plane. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the sixth aspect.

**In** an optional implementation, the transceiver unit (or the receiving unit) is configured to receive a paging message from a first access network device, where the paging message is used by the second central unit control plane to page a terminal device, the second central unit control plane is located in a second access network device, the paging message includes information about a first data size or includes a downlink small data transmission indication, and the first data size is a data size of downlink small data. The transceiver unit (or the sending unit) is configured to page the terminal device.

**In** an optional implementation, the communication apparatus further includes a storage unit (sometimes also referred to as a storage module). The processing unit is configured to: be coupled to the storage unit, and execute a program or instructions in the storage unit, to cause the communication apparatus to perform a function of the second central unit control plane according to any one of the first aspect to the fifth aspect.

According to a ninth aspect, a communication apparatus is provided. The communication apparatus may be a first central unit control plane, or may be a chip or a chip system used in the first central unit control plane. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first central unit control plane in the foregoing aspects.

According to a tenth aspect, a communication apparatus is provided. The communication apparatus may be a first central unit user plane, or may be a chip or a chip system used in the first central unit user plane. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first central unit user plane in the foregoing aspects. According to an eleventh aspect, a communication apparatus is provided. The communication apparatus may be a second central unit control plane, or may be a chip or a chip system used in the second central unit control plane. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the second central unit control plane in the foregoing aspects.

According to a twelfth aspect, a communication system is provided, including a first central unit user plane and a first central unit control plane. The first central unit control plane is configured to perform the method performed by the first central unit control plane according to any one of the first aspect to the fifth aspect, and the first central unit user plane is configured to perform the method performed by the first central unit user plane according to any one of the first aspect to the fifth aspect. For example, the first central unit control plane may be implemented by using the communication apparatus according to the sixth aspect or the ninth aspect, and the first central unit user plane may be implemented by using the communication apparatus according to the seventh aspect or the tenth aspect.

Optionally, the communication system may further include a second central unit control plane. The second central unit control plane is configured to perform the method performed by the second central unit control plane according to any one of the first aspect to the fifth aspect. The second central unit control plane may be implemented by using the communication apparatus according to the eighth aspect or the eleventh aspect.

According to a thirteenth aspect, a computer-readable storage medium is provided. The computer-readable storage medium is configured to store a computer program or instructions. When the computer program or the instructions are run, the method performed by the first central unit control plane, the first central unit user plane, or the second central unit control plane in the foregoing aspects is implemented.

According to a fourteenth aspect, a computer program product including instructions is provided. When the computer program product runs on a computer, the methods according to the foregoing aspects are implemented.

According to a fifteenth aspect, a chip system is provided, including a processor and an interface. The processor is configured to: invoke instructions from the interface and run the instructions, to cause the chip system to implement the methods according to the foregoing aspects.

### BRIEF DESCRIPTION OF DRAWINGS

FIG. 1 is a diagram of an example structure of a distributed base station;
FIG. 2 is a diagram of an example structure of a distributed base station;
FIG. 3 is a diagram of radio bearers RBs of a user equipment UE;
FIG. 4A is a diagram of an example application scenario according to an embodiment of this application;
FIG. 4B is a diagram of an example application scenario according to an embodiment of this application;
FIG. 5 is a flowchart of an example communication method according to an embodiment of this application;
FIG. 6 is a flowchart of an example communication method according to an embodiment of this application;
FIG. 7 is a diagram of an apparatus according to an embodiment of this application; and
FIG. 8 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one item (piece) of the following" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of objects. For example, a first radio resource control (radio resource control, RRC) request message and a second RRC request message may be a same message, or may be different messages. In addition, the names do not indicate that the two messages are different in content, size, application scenario, transmitting end/receiving end, priority, importance, or the like. In addition, step numbers in embodiments described in this application are merely intended to distinguish between different steps, but are not intended to limit a sequence of the steps. For example, S501 may be performed before S502, may be performed after S502, or may be simultaneously performed with S502.

The following describes some terms or concepts in embodiments of this application, to facilitate understanding of a person skilled in the art.

In embodiments of this application, a terminal device (which may also be referred to as a user equipment) is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to terminal devices in scenarios such as cellular communication, device-to-device (device-to-device, D2D) communication, vehicle-to-everything (vehicle-to-everything, V2X), machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearables, smart transportation, a smart city (smart city), an uncrewed aerial vehicle, and a robot. The terminal device may be sometimes referred to as a UE, a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (base transceiver station (base transceiver station, BTS), NodeB, eNodeB/eNB, or gNodeB/gNB), a transmission reception point (transmission reception point, TRP), a subsequently evolved base station in the 3rd Generation Partnership Project (3rd generation partnership project, 3GPP), and an access node, a wireless relay node, a wireless backhaul node, or the like in a wireless fidelity (wireless fidelity, Wi-Fi) system. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in the vehicle-to-everything (vehicle-to-everything, V2X) technology may be a road side unit (road side unit, RSU). The following provides descriptions by using an example in which the access network device is a base station. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems using the different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used to describe the technical solutions provided in embodiments of this application.

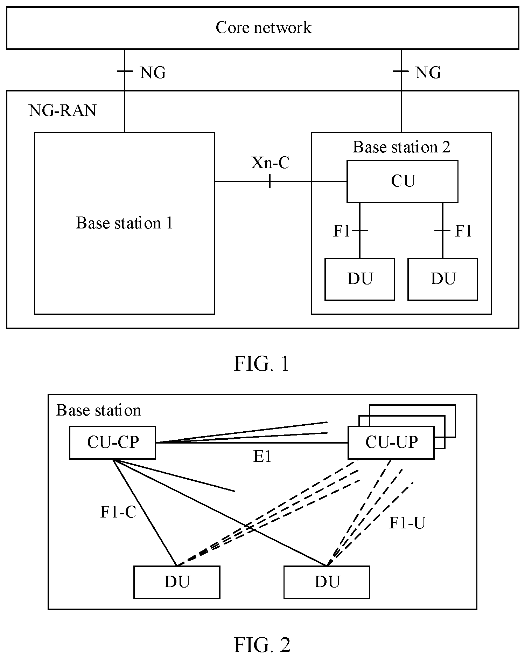

The base station in the access network device, for example, gNB, eNB NR, or en-gNB, is used as an example. Currently, in addition to a base station having a central architecture, there is also a base station having a distributed architecture. The distributed base station includes a gNB-CU and a gNB-DU. One distributed base station may include one or more gNB-DUs. For example, refer to FIG. 1. A base station 1 is in a central architecture, a base station 2 is in a distributed architecture, and Xn-C represents an interface between the base station 1 and the base station 2. A core network shown in FIG. 1 is, for example, a 5G core (5G core, 5GC). A gNB-CU (represented as a CU in FIG. 1) includes at least one of the following logical nodes: RRC, service data adaptation protocol (service data adaptation protocol, SDAP), or packet data convergence protocol (packet data convergence protocol, PDCP). A gNB-DU (represented as a DU in FIG. 1) includes at least one of the following logical nodes: radio link control (radio link control, RLC), media access control (media access control, MAC), or physical (PHY). An interface between the gNB-CU and the gNB-DU is an F1 interface.

Optionally, the gNB-CU may further include a gNB-CU-CP (which is referred to as a CU-CP for short in this specification) and a gNB-CU-UP (which is referred to as a CU-UP for short in this specification). Refer to a base station shown in FIG. 2. One gNB-CU includes one or more CU-UPs. The CU-CP is a logical node used to carry the RRC and a control plane part of the PDCP, and the CU-UP is a logical node used to carry a user plane part of the PDCP and the SDAP. As shown in FIG. 2, an interface between the CU-CP and the CU-UP is an E1 interface, an interface between the CU-CP and a gNB-DU is an F1-C interface, and an interface between the CU-UP and the gNB-DU is an F1-U interface.

For a RRC state of the UE, the UE currently has three RRC states in total, which are respectively a RRC_idle (idle) state, a RRC_inactive (inactive) state, and a RRC_connected state. If the UE has established a RRC connection, the UE is in the RRC connected state or the RRC inactive state. If the UE has not established a RRC connection, the UE is in the RRC idle state. The RRC inactive state is introduced for the UE in 5th generation mobile communication technology (the 5th generation, 5G) NR, and the RRC state is mainly for a case in which "a UE having infrequent (infrequent) data transmission is usually kept in the RRC inactive state by a network". The UE performs different operations in different RRC states. When the UE is in the RRC idle state, if the UE needs to perform data transmission, the UE may initiate a RRC connection setup process, to enter the RRC connected state. If the UE in the RRC connected state does not need to perform data transmission, the base station may release the UE, so that the UE enters the RRC idle state or the RRC inactive state. If the base station sends a release (release) message with a suspend indication, for example, a RRC release message with a suspend indication (RRC release with suspend indication), the UE enters the RRC inactive state; and if the base station sends a release message, for example, a RRC release message, the UE enters the RRC idle state. In addition, the UE in the RRC inactive state may further return to the RRC connected state by performing a RRC connection resume (resume) process, or the base station may release the UE in the RRC inactive state to the RRC idle state.

In some scenarios, the UE in a RRC non-connected state needs to perform transmission of a data packet that is usually very small, that is, the UE needs to perform transmission of only small data (small data), for example, a smartphone-related service like an instant message, a heartbeat packet, or a push message of some applications (APPs), or a non-smartphone-related service like periodic data (for example, a heartbeat packet) of a wearable device or a periodic reading (for example, a reading of a smart meter) sent by an industrial wireless sensor network. In this case, signaling overheads needed for the UE to enter the RRC connected state from the RRC non-connected state may even be greater than transmission overheads of the small data, resulting in unnecessary power consumption and signaling overheads. Therefore, a small data transmission procedure is currently introduced, for example, early data transmission (early data transmission, EDT) in a long term evolution (long term evolution, LTE) system or small data transmission (small data transmission, SDT) in a new radio (new radio, NR) system, both of which support the UE in directly performing transmission of the small data without entering the RRC connected state.

Currently, the small data transmission procedure is not always initiated upon arrival of each piece of data. For example, the base station may configure, for the UE, a radio bearer (radio bearer, RB) used for transmission of the small data, which may include a data radio bearer (data radio bearer, DRB) and/or a signaling radio bearer (signaling radio bearer, SRB). Transmission of only data on these RBs may be performed through the small data transmission procedure. These RBs may be referred to as small data transmission RBs, such as SDT RBs. In addition to these RBs, if data arrives at another RB of the UE, the small data transmission procedure cannot be initiated. The another RB is referred to as a non-small data transmission RB, for example, a non-SDT RB (non-SDT RB). Each RB includes the packet data convergence protocol (packet data convergence protocol, PDCP), the radio link control (radio link control, RLC), and a logical channel (logical channel, LCH), and the RB is mainly used to carry data (for example, a DRB) or signaling (for example, an SRB) in a data transmission process.

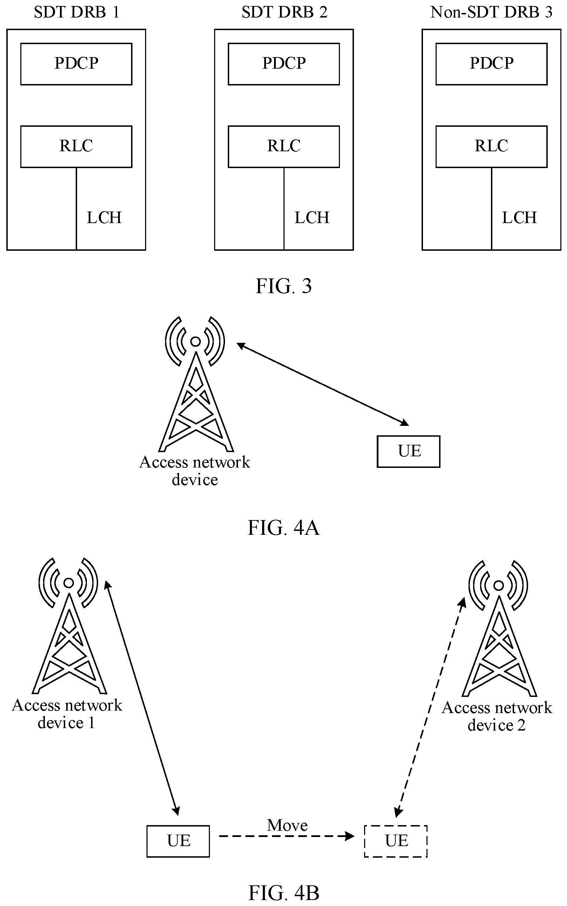

FIG. 3 is a diagram of three RBs of a UE: two SDT RBs (SDT DRB 1 and SDT DRB 2 in FIG. 3) and one non-SDT RB (non-SDT DRB 3 in FIG. 3). If data arrives at SDT DRB 1 and/or SDT DRB 2, a small data transmission procedure may be initiated. If data arrives at non-SDT DRB 3, the small data transmission procedure cannot be initiated.

When the UE is in a RRC non-connected state, for example, in a RRC inactive state, if a core network has downlink data of the UE, the core network sends the downlink data to a base station. If the base station is a distributed base station, the core network may send the downlink data to a CU-UP of the distributed base station. Before a small data transmission procedure starts, there is downlink data of the UE arriving at the CU-UP. In the small data transmission procedure, there is still downlink data of the UE arriving at the CU-UP. If the newly arrived downlink data is large in size, the CU-CP should direct the UE in a RRC connected state. However, the CU-CP does not know the arrival of the downlink data, and naturally does not direct the UE in the RRC connected state either. Consequently, even if the data size of the newly arrived downlink data is large, the CU-CP still transmits the downlink data using the small data transmission procedure, resulting low data transmission efficiency.

In view of this, in embodiments of this application, in a small data transmission procedure, a first central unit control plane may receive first information from a first central unit user plane. The first information is related to a data size of downlink data of a terminal device. Therefore, the first central unit control plane may determine that new downlink data arrives. Therefore, the first central unit control plane may determine, based on this, whether to direct the terminal device to a RRC connected state. It can be learned that, according to the technical solution in this embodiment of this application, even in the small data transmission procedure, the first central unit control plane can learn of arrival of the new downlink data, and therefore can determine whether to direct the terminal device to the RRC connected state, to improve data transmission efficiency.

The technical solutions provided in embodiments of this application may be applied to a 4th generation mobile communication technology (the 4th generation, 4G) system, for example, an LTE system, or may be applied to a 5G system, for example, an NR system, or may be applied to a next generation mobile communication system or another similar communication system. This is not specifically limited. In addition, the technical solutions provided in embodiments of this application may be applied to a device-to-device (device-to-device, D2D) scenario, for example, an NR-D2D scenario or an LTE-D2D scenario, or may be applied to a V2X scenario, for example, an NR-V2X scenario or an LTE-V2X scenario, or may be applied to a field like intelligent driving, assisted driving, or intelligent connected vehicle.

For example, FIG. 4A shows a communication network architecture to which an embodiment of this application is applicable. In FIG. 4A, a UE camps on an access network device. In this case, the UE may be in a RRC non-connected state. FIG. 4B shows another communication network architecture to which an embodiment of this application is applicable. In FIG. 4B, a UE in a RRC non-connected state moves from an access network device 1 to an access network device 2. The access network device 1 is an anchor (anchor) access network device of the UE, and the access network device 2 is not an anchor access network device of the UE, but an access network device on which the UE camps (that is, an access network device on which the UE currently camps). The anchor access network device of the UE stores a context of the UE, and the non-anchor access network device does not store the context of the UE.

For example, the access network device is a base station. If the UE initiates small data transmission in a new base station (which may also be referred to as a new base station, a receiving base station, or the like), an old base station (which may also be referred to as an old base station, an anchor base station, a previous base station, or the like) of the UE may further forward the context of the UE to the new base station. The context includes a context related to an RB (for example, an SDT RB) the UE for small data transmission. For example, when the old base station determines to change the anchor base station for the UE, the old base station may forward all of the context of the SDT RB of the UE to the new base station; or when the old base station determines not to change the anchor base station for the UE, the old base station may forward a partial context of the SDT RB of the UE to the new base station, and the partial context may include an RLC configuration of the SDT RB.

For more descriptions of the access network device and the UE, refer to the foregoing descriptions. For example, the access network device in FIG. 4A and/or FIG. 4B may be implemented by using the non-distributed architecture shown in FIG. 1, or may be implemented by using the distributed architecture shown in FIG. 1 or FIG. 2.

The following describes embodiments of this application with reference to the accompanying drawings. Unless otherwise specified below, in the accompanying drawings corresponding to embodiments of this application, steps represented by dashed lines are all optional steps.

In addition, in embodiments of this application, the RRC non-connected state includes, for example, the RRC inactive state or the RRC idle state. In embodiments of this application, an example in which the RRC non-connected state is the RRC inactive state is used for description. In embodiments of this application, a central unit control plane is, for example, a CU-CP, and a central unit user plane is, for example, a CU-UP. For example, the first central unit control plane is a first CU-CP, and the first central unit user plane is a first CU-UP; and a second central unit control plane is a second CU-CP, and a second central unit user plane is a second CU-UP. In embodiments of this application, the first CU-UP and the first CU-CP may be located in a first access network device, and the second CU-UP and the second CU-CP may be located in a second access network device.

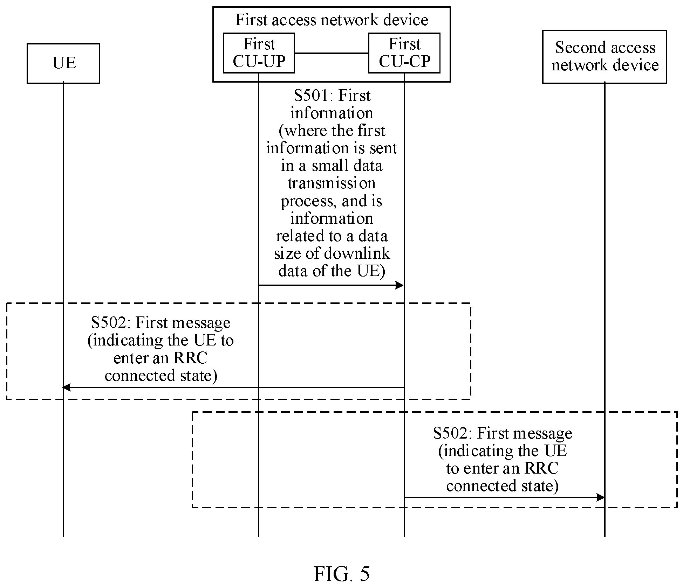

An embodiment of this application provides a communication method. FIG. 5 is a flowchart of the method. The method provided in this embodiment of this application may be applied to the network architecture shown in FIG. 4A. For example, a UE in the method in this embodiment of this application may be the UE in FIG. 4A, and a first access network device in the method in this embodiment of this application is, for example, the access network device in FIG. 4A. Alternatively, the method in this embodiment of this application may be applied to the network architecture shown in FIG. 4B. For example, a UE in the method in this embodiment of this application may be the UE in FIG. 4B, a first access network device in the method in this embodiment of this application is, for example, the access network device 1 in FIG. 4B, and a second access network device in the method in this embodiment of this application is, for example, the access network device 2 in FIG. 4B. Alternatively, a UE in the method in this embodiment of this application may be the UE in FIG. 4B, a first access network device in the method in this embodiment of this application is, for example, the access network device 2 in FIG. 4B, and a second access network device in the method in this embodiment of this application is, for example, the access network device 1 in FIG. 4B, or is an access network device not shown in FIG. 4B. For example, an anchor access network device of the UE is changed from the access network device 1 to the access network device 2.

S501: A first CU-UP sends first information to a first CU-CP in a process of small data transmission (performed) between the first access network device and the UE. Correspondingly, in the small data transmission process, the first CU-CP receives the first information from the first CU-UP. For example, the first information is included in a second message, and the second message is, for example, an E1 interface message between the first CU-UP and the first CU-CP.

The small data transmission procedure may include an uplink small data transmission procedure and/or a downlink small data transmission procedure. This is not specifically limited. For example, the uplink small data transmission procedure may be initiated by the UE when uplink small data arrives, and the uplink small data transmission procedure may also be referred to as a small data transmission procedure. For another example, the downlink small data transmission procedure may be initiated by a network device when downlink small data arrives, and the downlink small data transmission procedure may also be referred to as a small data transmission procedure.

The first information may be information related to downlink data of the UE, and the downlink data is downlink data that arrives at the first CU-UP. The downlink data may include downlink small data or downlink non-small data. The two cases are separately described below.
I: The downlink data may include the downlink small data. In this case, the first information may be implemented in different manners.

1. In an optional implementation of the first information, the first information indicates that a data size of the downlink small data is greater than or equal to a first threshold.

For example, if the first CU-UP determines that a data size of arrived downlink small data corresponding to the UE is greater than or equal to the first threshold, the first CU-UP may send first information to the first CU-CP, to indicate that the data size is greater than or equal to the first threshold. Optionally, the first information may further include an identifier of an SDT RB corresponding to the downlink small data, so that the first CU-CP can determine specific SDT RBs over which downlink small data is to be transmitted.

The first threshold may be a threshold used by the first access network device (for example, the first CU-CP) to determine whether to initiate small data transmission, or may be understood as a threshold used in an initial phase of the small data transmission. For example, if the UE is currently in a RRC non-connected state and does not perform data transmission, when (or after) downlink data of the UE arrives, the first access network device may determine, based on a data size of the downlink data and a second threshold, whether to initiate the small data transmission procedure. In this case, the first threshold may be the second threshold. In this solution, only one threshold needs to be set, and the threshold may be used for determining before the small data transmission procedure starts and in the small data transmission procedure. Maintenance of the threshold is simple, and this helps save storage space used to store the threshold.

Alternatively, the first threshold may alternatively be a threshold used to determine whether to direct the UE to a RRC connected state in the small data transmission procedure, or may be understood as a threshold used in a subsequent phase of the small data transmission. In this case, the first threshold may be equal to or not equal to the second threshold. In this solution, thresholds may be separately set for determining before the small data transmission procedure starts and determining in the small data transmission procedure. This is more conducive to improving accuracy of a determining result.

The foregoing describes the initial phase and the subsequent phase of the small data transmission. After the small data transmission procedure starts, a transmission phase of a 1^{st} piece of small data is understood as the initial phase of the small data transmission. After the initial phase, if there is still small data to be transmitted, the small data may continue to be transmitted. This process is understood as the subsequent phase of the small data transmission.

The first threshold may be a data size threshold shared by a plurality of UEs. The plurality of UEs are, for example, UEs covered by a same access network device, or the plurality of UEs belong to one UE group, or the plurality of UEs may be any plurality of UEs. In this solution, only one threshold needs to be set for each access network device. Maintenance of the threshold is simple, and this helps save storage space used to store the threshold. Alternatively, the first threshold may be a data size threshold corresponding to the UE. For example, the UE may be in one-to-one correspondence with the first threshold, and different UEs are respectively corresponding to their respective first thresholds. In this solution, the access network device sets a threshold for each UE. This helps separately control the different UEs, to meet service requirements of different UEs. Alternatively, the first threshold may be a data size threshold corresponding to an RB. For example, the RB may be in one-to-one correspondence with the first threshold, and different RBs are respectively corresponding to their respective first thresholds. In this solution, the access network device sets a threshold for each RB. This helps implement different control on different RBs and can refine a control granularity, to improve control precision. A first threshold obtained by the first CU-UP may include only one type of first threshold, for example, include the first threshold shared by the plurality of UEs, or include the data size threshold corresponding to the RB. Alternatively, a first threshold obtained by the first CU-UP may include any plurality types of first thresholds, for example, include both the first threshold corresponding to the UE and the data size threshold corresponding to the RB.

When the first threshold is of different types, processes in which the first CU-UP determines the downlink small data may also be different. For example, if the first threshold is the data size threshold shared by the plurality of UEs, or the first threshold is the data size threshold corresponding to the UE, the downlink small data used by the first CU-UP to compare with the first threshold may include entire or partial downlink small data of all RBs that are of the UE and that are used for small data transmission. Alternatively, if the downlink small data determined by the first CU-UP includes entire or partial downlink small data of all RBs that are of the UE and that are used for small data transmission, the first threshold used by the first CU-UP may be the first threshold shared by the plurality of UEs or the first threshold corresponding to the UE. The entire or partial downlink small data, determined by the first CU-UP, of all the RBs of the UE for small data transmission may include entire or partial downlink small data that has arrived at the first CU-UP and that is corresponding to all the RBs. For example, in the downlink small data that has arrived at the first CU-UP and that is corresponding to all the RBs, a service corresponding to some pieces of the downlink small data is insensitive to a transmission delay. For example, if the service corresponding to the some pieces of the downlink small data is a delay-insensitive service, even if transmission of the some pieces of the downlink small data is not performed using the small data transmission procedure, but is performed after the UE enters the RRC connected state, impact on the service is weak, and transmission in the RRC connected state helps improve transmission quality. In this case, the first CU-UP may determine whether a data size of the arrived partial downlink small data corresponding to all the RBs is greater than or equal to the first threshold. The partial downlink small data may not include downlink small data corresponding to the delay-insensitive service. If the small data transmission procedure is initiated, transmission may be performed on only the partial downlink small data, and no transmission is performed on the downlink small data corresponding to the delay-insensitive service. For another example, the first CU-CP may not need to distinguish between services corresponding to the downlink small data, but determine whether a data size of all the arrived downlink small data corresponding to all the RBs is greater than or equal to the first threshold. If the small data transmission procedure is initiated, transmission may be performed on all the downlink small data corresponding to all the RBs.

For another example, if the first threshold is the data size threshold corresponding to the RB, the downlink small data used by the first CU-UP to compare with the first threshold may include entire or partial downlink small data of an RB that is of the UE and that is used for small data transmission. Alternatively, if the downlink small data determined by the first CU-UP includes downlink small data of an RB that is of the UE and that is used for small data transmission, the first threshold used by the first CU-UP may be the data size threshold corresponding to the RB. For example, the first threshold is a data size threshold corresponding to a first RB of the UE, and the downlink small data determined by the first CU-UP may include entire or partial downlink small data of the first RB. The entire or partial downlink small data that is determined by the first CU-UP and that is of the first RB may include entire or partial downlink small data that has arrived at the first CU-UP and that is corresponding to the first RB.

The first threshold may be set by the access network device, for example, set by the first CU-UP or the first CU-CP. Alternatively, the first threshold may be preconfigured in the access network device. For example, the first threshold is preconfigured in one or more modules of the first CU-UP, the first CU-CP, or a first DU, and the first DU is located in the first access network device. Alternatively, the first threshold may be predefined in a protocol.

If the first threshold is set by the first CU-CP or is preconfigured in the first CU-CP, the first CU-CP may send the first threshold to the first CU-UP. Optionally, if the first threshold is the data size threshold shared by the plurality of UEs, the first threshold may be included in non-UE-associated signaling (non-UE-associated signaling), for example, an interface setup request message or an interface setup response message. In other words, the first CU-UP may obtain the first threshold through the non-UE-associated signaling, for example, the interface setup request message or the interface setup response message. The interface setup request message is used to request setup of a connection between the first CU-UP and the first CU-CP, and the interface setup response message is used to acknowledge the setup of the connection. In other words, the first CU-UP may obtain the first threshold in a setup process of the connection, and the connection is, for example, a connection of an E1 interface. Alternatively, the interface setup request message is used to exchange application level data needed for the first CU-CP and the first CU-UP to correctly interoperate on an E1 interface, and the interface setup response message is used to exchange the application level data needed for the first CU-CP and the first CU-UP to correctly interoperate on the E1 interface.

For example, the first CU-UP may send the interface setup request message to the first CU-CP. The interface setup request message is, for example, a base station CU-UP E1 setup request (gNB-CU-UP E1 setup request) message. After receiving the gNB-CU-UP E1 setup request message, the first CU-CP sends the interface setup response message to the first CU-UP. The interface setup response message is, for example, a base station CU-UP E1 setup response (gNB-CU-UP E1 setup response) message. The gNB-CU-UP E1 setup response message may include the first threshold. In this case, the first CU-UP obtains the first threshold. Optionally, an information element (information element, IE) may be included in the gNB-CU-UP E1 setup response message, and the IE may include the first threshold.

For another example, the first CU-CP may send the interface setup request message to the first CU-UP. The interface setup request message is, for example, a base station CU-CP E1 setup request (gNB-CU-CP E1 setup request) message. The gNB-CU-CP E1 setup request message may include the first threshold. In this case, the first CU-UP obtains the first threshold. Optionally, an IE may be included in the gNB-CU-CP E1 setup request message, and the IE may include the first threshold. In addition, after receiving the gNB-CU-CP E1 setup request message, the first CU-UP sends the interface setup response message to the first CU-CP. The interface setup response message is, for example, a base station CU-CP E1 setup response (gNB-CU-CP E1 setup response) message.

Alternatively, if the first threshold is the data size threshold corresponding to the UE, or the first threshold is the data size threshold corresponding to the RB, the first threshold may be included in UE-associated signaling (UE-associated signaling), for example, included in a bearer context setup request message. The bearer context request message may be used to request setup of an RB context, or used to request to set up the RB context. The bearer context request message may be used to request to set up a partial or entire RB context. The bearer context setup request message is, for example, a bearer context setup request (bearer context setup request) message.

For example, the first CU-CP may send the bearer context setup request message to the first CU-UP, and the bearer context setup request message may include the first threshold, so that the first CU-UP can obtain the first threshold. For example, an IE is added to the bearer context setup request message, and the IE may include the first threshold. If a plurality of RBs of the UE are respectively corresponding to first thresholds, the first thresholds may be sent to the first CU-UP through a same bearer context setup request message, or may be sent to the first CU-UP through different bearer context setup request messages. The different bearer context setup request messages may be used to set up different RBs of the UE.

Alternatively, if the first threshold is set by the first DU or is preconfigured in the first DU, the first threshold may be sent by the first DU to the first CU-UP. That the first DU sends information (for example, the first threshold) to the first CU-UP may include: The first DU directly sends the information to the first CU-UP, or the first DU first sends the information to the first CU-CP, and then the first CU-CP sends the information to the first CU-UP.

Alternatively, if the first threshold is set by the first CU-UP, or is preconfigured in the first CU-UP, or is predefined in the protocol, or the like, the first CU-UP may directly obtain the first threshold without signaling transmission.

2. In another optional implementation of the first information, the first information indicates a data size of the downlink small data.

The downlink small data may include entire or partial downlink small data of all RBs that are of the UE and that are used for small data transmission, for example, include entire or partial downlink small data that has arrived at the first CU-UP and that s corresponding to all the RBs; or the downlink small data may include entire or partial downlink small data of an RB (for example, a first RB) of the UE, for example, include entire or partial downlink small data that has arrived at the first CU-UP and that is corresponding to the first RB, where the first RB is an RB used for small data transmission, for example, an SDT RB.

In this implementation, the first information may directly indicate the data size of the downlink small data, and a correspondence between the data size and the first threshold does not need to be determined. Implementation is simple for the first CU-UP. For example, the first CU-UP does not need to obtain the first threshold. For example, the downlink small data includes the entire or partial downlink small data of all the RBs that are of the UE and that are used for small data transmission. In this case, for the first CU-UP, provided that downlink small data of the UE arrives, no matter which SDT RB of the UE is used for transmission of the downlink small data, the first CU-UP may send first information to the first CU-CP. For example, the first information indicates a data size of newly arrived downlink small data corresponding to the UE, or indicates a data size of all to-be-transmitted downlink small data that is corresponding to the UE and that has arrived at the first CU-UP.

For another example, if the downlink small data includes the entire or partial downlink small data of the first RB of the UE, for the first CU-UP, the first CU-UP may send first information to the first CU-CP provided that downlink small data of the first RB arrives. For example, the first information indicates a data size of newly arrived downlink small data corresponding to the first RB, or indicates a data size of all to-be-transmitted downlink small data that is corresponding to the first RB and that has arrived at the first CU-UP. Optionally, the first RB included in the first information may alternatively be a first RB list, and the first RB list includes at least one first RB and entire or partial downlink small data corresponding to the at least one first RB.

Optionally, if the first information indicates the data size of the downlink small data, the first CU-UP may send first information to the first CU-CP provided that the first CU-UP detects downlink small data (or detects that the downlink small data arrives). For example, in the small data transmission procedure, the first CU-UP may detect downlink small data for a plurality of times. In this case, the first CU-UP may send first information to the first CU-CP for a plurality of times. As described above, the first information may be included in the second message. Optionally, regardless of any one of the foregoing manners is used for the first information, the second message may be UE-associated signaling, for example, a downlink data notification (DL data notification) message or a bearer context modification required (bearer context modification required) message. Optionally, if the second message is a bearer context modification required message, after receiving the bearer context modification required message, the first CU-CP may further send a bearer context modification confirm (bearer context modification confirm) message to the first CU-UP, to configure, for the first CU-UP, a context and the like needed for the UE to enter the RRC connected state. The context needed for the UE to enter the RRC connected state may include a context of an RB used when the UE enters the RRC connected state, for example, an identifier of the RB or a cell group identifier corresponding to the RB. Optionally, an IE may be included in the second message, and the IE may include the first information.

II: The downlink data may include the downlink non-small data.

In this case, the first information may indicate that the downlink non-small data arrives. For example, if arrived downlink data is downlink data to be transmitted over a non-SDT RB of the UE, the first CU-UP may send the first information to the first CU-CP when detecting that the downlink non-small data arrives.

As described above, the first information may be included in the second message. Optionally, the second message may be UE-associated signaling, for example, a DL data notification message or a bearer context modification required message. For example, an IE may be included in the second message. The IE may include the first information, and the first information explicitly indicates arrival of the downlink non-small data. Optionally, the first information may further include an identifier of the non-SDT RB corresponding to the downlink non-small data, so that the first CU-CP can determine specific non-SDT RBs over which downlink data is to be transmitted. Optionally, if the second message is the bearer context modification required message, after receiving the bearer context modification required message, the first CU-CP may further send a bearer context modification confirm message to the first CU-UP, to configure, for the first CU-UP, a context and the like needed for the UE to enter the RRC connected state. The context needed for the UE to enter the RRC connected state may include a context of an RB used when the UE enters the RRC connected state, for example, an identifier of the RB or a cell group identifier corresponding to the RB.

Alternatively, for example, the second message includes an IE indicating a protocol data unit (protocol data unit, PDU) session to notify list for small data transmission. The second message may be an existing message, for example, a DL data notification message, or the second message may be a newly defined message. If the second message is the existing message, for example, the DL data notification message, the DL data notification message originally also includes a PDU session to notify list, but the PDU session to notify list is not a PDU session to notify list for small data transmission. In this embodiment of this application, this is equivalent to a case in which an IE is newly introduced into the DL data notification message, and the IE may indicate the PDU session to notify list for small data transmission. Alternatively, if the second message is the newly defined message, in this embodiment of this application, this is equivalent to a case in which the IE indicating the PDU session to notify list for small data transmission is introduced into the newly defined message. In this implementation, the second message may include an identifier of at least one RB. For example, the identifier of the at least one RB is included in the newly introduced IE. For example, the first information includes the identifier of the at least one RB, or the newly introduced IE may be considered as the first information, or the first information may include the identifier of the at least one RB and the PDU session to notify list for small data transmission. The at least one RB is a non-SDT RB, and the downlink non-small data may be transmitted over the at least one RB. That is, this is equivalent to a case in which the identifier of the non-SDT RB is included in an IE in which the PDU session to notify list for small data transmission is included, or the identifier of the non-SDT RB is included in the PDU session to notify list for small data transmission, so that the first CU-CP can determine, based on "the identifier of the non-SDT RB that is included in the PDU session to notify list used for small data transmission", that downlink non-small data currently arrives.

S502: The first CU-CP sends a first message based on the first information. Optionally, the first message may indicate to direct the UE to the RRC connected state.

If the first information indicates that the data size of the downlink small data is greater than or equal to the first threshold, or the first information indicates arrival of the downlink non-small data, after receiving the first information, the first CU-CP may directly send the first message without needing to perform another determining process.

Alternatively, if the first information indicates the data size of the downlink small data, after receiving the first information, the first CU-CP may directly send the first message, or may determine whether to direct the UE to the RRC connected state, or determine whether to stop the small data transmission procedure with the UE. If determining to direct the UE to the RRC connected state, or determining to stop the small data transmission procedure with the UE, the first CU-CP may perform S502; or if determining not to direct the UE to the RRC connected state, or determining not to stop the small data transmission procedure with the UE, the first CU-CP may not perform S502, but continue performing the small data transmission procedure with the UE. Optionally, if the first CU-CP needs to determine whether to direct the UE to the RRC connected state, or determine whether to stop the small data transmission procedure with the UE, the first CU-CP may perform determining based on the first threshold. For the related descriptions of the first threshold, refer to the foregoing descriptions. If the first threshold is set by the first CU-UP or is preconfigured in the first CU-UP, the first CU-UP may send the first threshold to the first CU-CP. For example, the first CU-UP may send the first threshold to the first CU-CP through the foregoing interface setup request message or interface setup response message, or the first CU-UP may send the first threshold to the first CU-CP through a bearer context setup response message. The bearer context setup response message is, for example, a bearer context setup response (bearer context setup response) message. For details, refer to the foregoing descriptions. Details are not described. Alternatively, if the first threshold is set by the first DU or is preconfigured in the first DU, the first threshold may be sent by the first DU to the first CU-UP. Alternatively, if the first threshold is set by the first CU-CP, or is preconfigured in the first CU-CP, or is predefined in the protocol, or the like, the first CU-CP may directly obtain the first threshold without signaling transmission.

For example, the first CU-CP may determine whether the data size of the downlink small data is greater than or equal to the first threshold. If the data size of the downlink small data is greater than or equal to the first threshold, the first CU-CP may perform S502. If the data size of the downlink small data is less than the first threshold, the first CU-CP may not perform S502, for example, continue performing the small data transmission procedure with the UE. Optionally, as described above, in the small data transmission procedure, the first CU-UP may detect the downlink small data for the plurality of times. In this case, the first CU-UP may send the first information to the first CU-CP for the plurality of times, and the first CU-CP may also determine, for a plurality of times, whether a data size of the downlink small data is greater than or equal to the first threshold. For example, each time the first CU-CP receives one piece of first information, the first CU-CP may determine whether the data size of the downlink small data is greater than or equal to the first threshold. If determining that the data size of the downlink small data is greater than or equal to the first threshold in any determining process, the first CU-CP may perform S502. If determining that the data size of the downlink small data is less than the first threshold, the first CU-CP may not perform S502, for example, continue performing the small data transmission procedure with the UE.

At a time, the first CU-CP determines whether a data size of downlink small data is greater than or equal to the first threshold after receiving first information. The data size participating in this determining process may be a data size indicated by the first information received at this time. Alternatively, the first CU-CP may have received one or more pieces of first information before, and each piece of first information indicates a data size of downlink small data. In this case, the data size participating in this determining process may alternatively be a sum of the data sizes indicated by all the first information received by the first CU-CP.

An example in which the first CU-CP performs S502 is used. The following descriptions may be corresponding to the case in which the first information indicates the downlink small data, or may be corresponding to the case in which the first information indicates the downlink non-small data. If the first access network device is an anchor access network device of the UE, and the UE performs the small data transmission procedure in the first access network device, the first CU-CP may send the first message to the UE via the first DU, and the first message may indicate to direct the UE to the RRC connected state. For example, the first message is a RRC resume (RRC resume) message, or may be another message, for example, RRC setup (RRC setup) information. After receiving the first message, the UE may enter the RRC connected state and send a response to the first access network device (for example, to the first DU). The response may indicate that the UE has successfully entered the RRC connected state. After the UE enters the RRC connected state, the first access network device (for example, the first CU-UP) may send the downlink small data or the downlink non-small data to the UE via the first DU. If the downlink small data is sent, the downlink small data is no longer transmitted through the small data transmission procedure, and therefore may also be referred to as downlink data. Optionally, that the first access network device is an anchor access network device of the UE includes a case in which the UE performs small data transmission in an old base station. For example, the first access network device is the old base station. Optionally, that the first access network device is an anchor access network device of the UE further includes a case in which the UE performs small data transmission in a new station and an old station forwards a context of the UE to the new station, that is, a case in which the UE performs the small data transmission in the new station and changes the anchor access network device to the new station. For example, the first access network device is the new station, and the second access network device is the old station. The first access network device and the second access network device belong to a same radio access network notification area (radio access network notification area, RNA).

Alternatively, if the first access network device is an anchor access network device of the UE, the UE camps on another access network device, and the UE performs the small data transmission procedure in the another access network device, the first CU-CP may determine to directly direct the UE to the RRC connected state. For example, the first CU-CP may send the first message to the another access network device. For example, the another access network device includes an access network device belonging to a same RNA as the first access network device. For example, the another access network device includes the second access network device. The second access network device is used as an example for description. If the second access network device is also an access network device in a distributed structure, for example, the second access network device includes modules such as a second CU-CP and a second CU-UP, the first CU-CP may send the first message to the second CU-CP, and the first message may indicate to direct the UE to the RRC connected state. After receiving the first message, the second CU-CP may send a message, for example, referred to as a message A, to the UE via a second DU included in the second access network device. The message A may indicate to direct the UE to the RRC connected state. For example, the message A is a RRC resume message, or may be another message, for example, a RRC setup message. After receiving the message A, the UE may enter the RRC connected state and send a response to the second access network device (for example, to the second DU). The response may indicate that the UE has successfully entered the RRC connected state. The second access network device may indicate, to the first access network device, that the UE has entered the RRC connected state. For example, the second CU-CP may send a message to the first CU-CP, to indicate that the UE has entered the RRC connected state. After the UE enters the RRC connected state, the second access network device (for example, the second CU-UP) may send the downlink small data or the downlink non-small data to the UE. If the downlink small data is sent, the downlink small data is no longer transmitted through the small data transmission procedure, and therefore may also be referred to as downlink data. If the second access network device is not an access network device in a distributed structure, the first CU-CP may send the first message to the second access network device, and the second access network device sends a message A to the UE. Another process is similar to a processing process used when the second access network device is the access network device in the distributed structure. Details are not described again. Alternatively, if the first access network device is an anchor access network device of the UE, the UE camps on another access network device, and the UE performs the small data transmission process in the another access network device, the first CU-CP may determine to first release the UE to the RRC non-connected state. Alternatively, it is understood that the first CU-CP may determine to first end the current small data transmission procedure. In this case, the first CU-CP sends a message, for example, referred to as a message B, to the another access network device. The message B may not indicate the UE to enter the RRC connected state, or indicate the UE to enter the RRC non-connected state. For example, the another access network device includes at least one access network device belonging to a same RNA as the first access network device. For example, the another access network device includes the second access network device. The second access network device is used as an example for description. If the second access network device is also an access network device in a distributed structure, for example, the second access network device includes modules such as a second CU-CP and a second CU-UP, the first CU-CP may send the message B to the second CU-CP, and the message B may not indicate the UE to enter the RRC connected state, or indicate to release the UE to the RRC non-connected state or to end the current small data transmission procedure. After receiving the message B, the second CU-CP may send a message, for example, referred to as a message A, to the UE via a second DU included in the second access network device. The message A may not indicate the UE to enter the RRC connected state, or indicate the UE to enter the RRC non-connected state or to end the current small data transmission procedure. For example, the message A is a RRC release message, or may be another message. After receiving the message A, the UE may enter the RRC non-connected state or end the current small data transmission procedure. Alternatively, if the second access network device is not an access network device in a distributed structure, the first CU-CP may send the first message to the second access network device, and the second access network device sends a message A to the UE. Another process is similar to a processing process used when the second access network device is the access network device in the distributed structure. Details are not described again. After the UE is released to the RRC non-connected state, or after the current small data transmission procedure of the UE is ended, the first access network device (for example, the first CU-CP) may send a paging message. For example, the first access network device sends the paging message to the UE and/or at least one access network device in a same RNA. If the paging message indicates downlink small data transmission, the UE may respond to the paging message and initiate a process used for small data transmission, for example, initiate a RRC connection resume process used for small data transmission. For example, the UE sends, to the second access network device, a RRC request message related to the small data transmission. The second access network device forwards the RRC request message related to the small data transmission to the first access network device. Then, the first access network device may determine to change the anchor access network device, and send a context of the UE to the second access network device. Then, the second access network device directs the UE to the RRC connected state. Optionally, the first access network device may further send indication information, for example, referred to as indication information A, to the second access network device. For example, the indication information A and the context of the UE are included in a same message. For example, the message is the first message. The indication information A may recommend or indicate the second access network device to direct the UE to the RRC connected state. Alternatively, optionally, if the first message includes the context of the UE and does not include the indication information A, it may also be considered that the context of the UE implicitly indicates the second access network device to direct the UE to the RRC connected state. If the paging message sent by the first access network device does not indicate downlink small data, the UE may initiate the RRC connection resume process in response to the paging message, to request to enter the RRC connected state. After the UE enters the RRC connected state, the second access network device (for example, the second CU-UP) may send the downlink small data or the downlink non-small data to the UE. If the downlink small data is sent, the downlink small data is no longer transmitted through the small data transmission procedure, and therefore may also be referred to as downlink data.

In this embodiment of this application, in the small data transmission process, the first CU-CP may receive the first information from the first CU-UP, and the first information is related to the downlink data of the UE. Therefore, the first CU-CP may determine that new downlink data arrives. Therefore, the first CU-CP may determine, based on this, whether to direct the UE to the RRC connected state. It can be learned that, according to the technical solution in this embodiment of this application, even in the small data transmission process, the first CU-CP can learn of arrival of the new downlink data, and therefore can direct the UE to the RRC connected state in a timely manner, to improve data transmission efficiency.

As described above, if the UE is currently in the RRC non-connected state and does not perform the data transmission, when downlink data of the UE arrives (or after the downlink data arrives), the base station may determine, based on information such as a data size of the downlink data, whether to initiate the small data transmission procedure to send the downlink data to the UE. For the distributed base station, the determining process may be performed by a CU-CP. Therefore, a CU-UP may notify the CU-CP of the data size of the downlink data, so that the CU-CP performs determining.

However, in some scenarios, the CU-CP may not initiate the small data transmission procedure. For example, the CU-CP may not configure a related configuration of the SDT for the UE. In this case, even if a data size of to-be-transmitted downlink data is small, the CU-CP does not initiate the small data transmission procedure either. Therefore, the CU-CP does not need to obtain the data size of the downlink data. However, the CU-UP does not know a corresponding case. Therefore, the CU-UP may still notify the CU-CP of the data size of the downlink data. As a result, the CU-UP and the CU-CP perform a redundant step of performing transmission of the data size, and power of the base station is consumed.

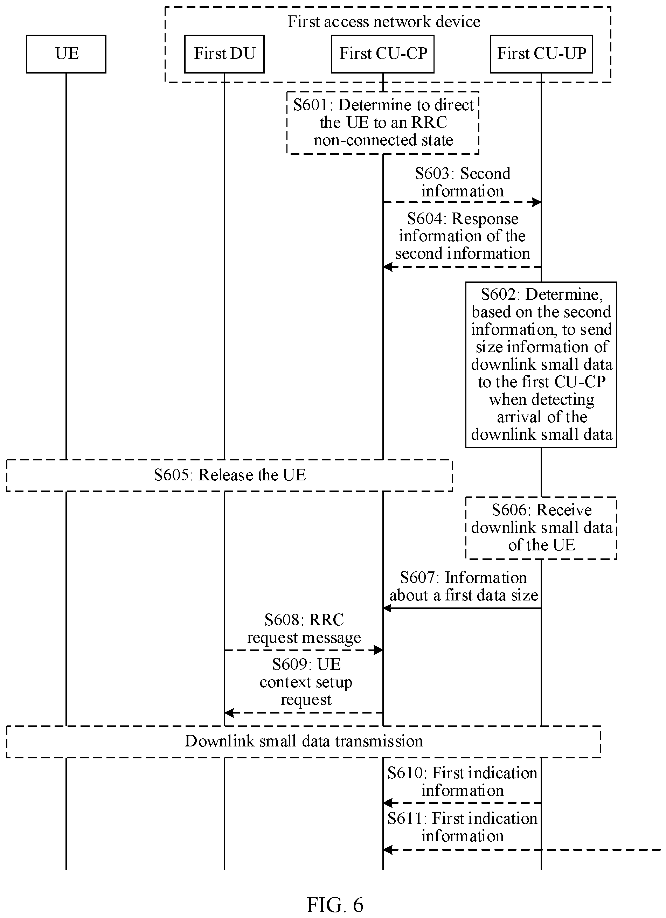

Therefore, an embodiment of this application provides another communication method. FIG. 6 is a flowchart of the method. The method provided in this embodiment of this application may be applied to the network architecture shown in FIG. 4A. For example, a UE in the method in this embodiment of this application may be the UE in FIG. 4A, and a first access network device in the method in this embodiment of this application is, for example, the access network device in FIG. 4A. Alternatively, the method in this embodiment of this application may be applied to the network architecture shown in FIG. 4B. For example, a UE in the method in this embodiment of this application may be the UE in FIG. 4B, a first access network device in the method in this embodiment of this application is, for example, the access network device 1 in FIG. 4B, and a second access network device in the method in this embodiment of this application is, for example, the access network device 2 in FIG. 4B. Alternatively, a UE in the method in this embodiment of this application may be the UE in FIG. 4B, a first access network device in the method in this embodiment of this application is, for example, the access network device 2 in FIG. 4B, and a second access network device in the method in this embodiment of this application is, for example, the access network device 1 in FIG. 4B, or is an access network device not shown in FIG. 4B. For example, an anchor access network device of the UE is changed from the access network device 1 to the access network device 2.

S601: A first CU-CP determines (or decides) to direct the UE to (or release the UE to) a RRC non-connected state.

For example, if the UE is currently in a RRC connected state, the first CU-CP may determine to direct the UE to the RRC non-connected state. For another example, if the UE is currently in a RRC non-connected state but is in a small data transmission procedure (an uplink small data transmission procedure and/or a downlink small data transmission procedure), a first CU-UP may determine to direct the UE to the RRC non-connected state, or direct the UE to the RRC non-connected state in which small data transmission is not performed, or to end the small data transmission procedure of the UE.

For example, the first CU-CP receives inactivity indication information from the first CU-UP. The inactivity indication information is, for example, a bearer context inactivity notification (bearer context inactivity notification) message, and the inactivity indication information may indicate current activity information of the UE. For example, if the inactivity indication information indicates that the activity information of the UE is "not active (not active)", it may indicate that the UE has no data to be transmitted (where the UE may be in the RRC non-connected state or may be in the small data transmission procedure), the first CU-CP may determine, based on the inactivity indication information, to release the UE to the RRC non-connected state. This is not limited thereto. The first CU-CP may further determine, based on other information, to release the UE to the RRC non-connected state. For example, the first CU-CP may determine, based on stored information, to release the UE to the RRC non-connected state, or determine, based on other information from the first CU-UP, to release the UE to the RRC non-connected state, or determine, based on information from another network element, to release the UE to the RRC non-connected state. The another network element includes, for example, an AMF. For example, the first CU-CP receives indication information from the AMF. The indication information is, for example, an "end indication (end indication)", or may indicate that the UE has no data or signaling to be transmitted (where the UE may be in the RRC non-connected state or may be in the small data transmission procedure). In this case, the first CU-CP may also determine to release the UE to the RRC non-connected state.

S601 is an optional step. If the UE is currently in the RRC non-connected state in which no small data transmission is performed, S601 does not need to be performed.

S602: The first CU-UP determines, based on second information, to send size information of downlink small data to the first CU-CP when detecting arrival of the downlink small data (or after arrival of the downlink small data). Alternatively, S602 may be replaced with: The first CU-UP determines, based on second information, whether to send size information of downlink small data to the first CU-CP when detecting arrival of the downlink small data (or after arrival of the downlink small data). Optionally, the first CU-UP may determine, based on the second information, whether to send the size information of the downlink small data to the first CU-CP when detecting arrival of the downlink small data (or after arrival of the downlink small data). In S602, an example in which the size information of the downlink small data needs to be sent to the first CU-CP is used.

Optionally, the second information may be from the first CU-CP. For example, S603 is further included before S602: The first CU-CP sends the second information to the first CU-UP. Correspondingly, the first CU-UP receives the second information from the first CU-CP. For example, the second information is included in a third message. In this embodiment of this application, the first CU-UP may determine, based on a factor like the second information, whether to send the downlink small data size information to the first CU-CP. For example, when the first CU-CP does not need the downlink small data size information, the downlink small data size information does not need to be sent. This reduces transmission processes of redundant information, and helps reduce power consumption of a base station. The second information may be implemented in a plurality of manners, and the following provides examples for description.
1. The second information indicates the first CU-UP to send small data size information when the first CU-UP detects that downlink small data arrives, or the second information is used to request small data size information when it is detected that downlink small data arrives. The small data size information is, for example, downlink small data size information.

Size information that is of small data and that is sent by the first CU-UP to the first CU-CP is usually data size information of downlink small data.

Optionally, the second information may be further related to an RB (for example, an SDT RB) used for small data transmission. The SDT RB may include an SDT DRB and/or an SDT SRB.

For example, if uplink small data transmission and downlink small data transmission share an SDT RB, that is, any SDT RB of the UE may be used for transmission of both uplink small data and downlink small data, the first CU-UP may determine, based on an SDT RB configuration, whether there is a related configuration for small data transmission. However, the first CU-UP cannot determine whether the UE also has a related configuration for small data transmission, and cannot determine whether the downlink small data size information needs to be sent to the first CU-CP when the downlink small data arrives. Therefore, the second information may indicate only information related to downlink small data transmission. For example, the second information indicates the first CU-UP to send the downlink small data size information when the first CU-UP detects that the downlink small data arrives, or the second information is used to request the downlink small data size information when it is detected that the downlink small data arrives. This is equivalent to a case in which the second information explicitly indicates, to the first CU-UP, that a downlink small data transmission process may be subsequently performed. Therefore, the first CU-UP needs to send a data size of the downlink small data to the first CU-CP.

For another example, if an SDT RB used for uplink small data transmission is different from an SDT RB used for downlink small data transmission, that is, any SDT RB of the UE may be used for transmission of uplink small data instead of downlink small data or may be used for transmission of downlink small data instead of uplink small data, the first CU-UP may determine, based on an SDT RB configuration, whether there is a related configuration for downlink small data transmission. However, the first CU-UP cannot determine whether the UE also has a related configuration for downlink small data transmission, and cannot determine whether the downlink small data size information needs to be sent to the first CU-CP when the downlink small data arrives. Therefore, the second information may indicate information related to a small data transmission indication, and does not need to indicate a "downlink". For example, the second information indicates the first CU-UP to send the small data size information when the first CU-UP detects that the downlink small data arrives, or the second information is used to request the small data size information when it is detected that the downlink small data arrives. This is equivalent to a case in which the second information indicates, to the first CU-UP, that corresponding data size information is to be sent. To be specific, the second information may be implicitly related to the downlink small data, and the second information does not need to indicate a "downlink".

In the following description process, an example in which the second information indicates the first CU-UP to send the downlink small data size information when the first CU-UP detects that the downlink small data arrives or indicate to request the downlink small data size information is used.

In addition, the second information has different implementations. In an optional implementation of the second information, regardless of whether the second information indicates to send or not to send the downlink small data size information when it is detected that the downlink small data arrives, the method may include S603. For example, the second information may be used as indication information. The second information may indicate the first CU-UP to send the downlink small data size information when the first CU-UP detects that the downlink small data arrives, or the second information is used to request the downlink small data size information when it is detected that the downlink small data arrives. Optionally, an IE may be included in the third message, and the second information may be included in the IE, so that the first CU-UP can determine, based on the added IE, that the IE includes the second information. Alternatively, the third message may be a newly defined message, and the message is dedicated to carrying the second information. In this case, the first CU-UP can determine, based on the third message, that the message includes the second information.

For example, the second information occupies 1 bit (bit), and a value of the bit may be "0" or "1", or a value of the bit may be "true (true)" or "false (false)". If the value of the bit is "1" or "true", it indicates that the second information indicates the first CU-UP to send the downlink small data size information when the first CU-UP detects that the downlink small data arrives, or indicates that the second information is used to request the downlink small data size information when it is detected that the downlink small data arrives. Alternatively, if the value of the bit is "1" or "true", it indicates that the second information indicates the first CU-UP not to send the downlink small data size information when the first CU-UP detects that the downlink small data arrives, or indicates that the second information is not used to request the downlink small data size information when it is detected that the downlink small data arrives. Alternatively, the second information may occupy more bits. This is not specifically limited.

For another example, the third message including the second information may be a bearer context modification request (bearer context modification request) message. The bearer context modification request message includes a bearer context status change (bearer context status change) information element (information element, IE). The bearer context status change IE may be set to be of a plurality of types (types), or may be referred to as being set to a plurality of references (references) or values. This is not limited in this embodiment of this application. An example in which an IE may be set to a plurality of values is used for description. If the value of the bearer context status change IE is a first value or a second value, the bearer context status change IE is the second information. For example, if the value of the bearer context status change IE is the first value, it indicates that the second information indicates the first CU-UP to send the downlink small data size information, or indicates that the second information is used to request the downlink small data size information. Alternatively, if the value of the bearer context status change IE is the second value, it indicates that the second information indicates the first CU-UP not to send the downlink small data size information, or indicates that the second information is not used to request the downlink small data size information. The first value and/or the second value may be existing values/an existing value of the bearer context status change IE, or a value newly extended for the bearer context status change IE in this embodiment of this application. For example, the first value may be existing "suspend for SDT (suspend for SDT)", or may be newly extended "suspend for mobile terminated (mobile terminated, MT) SDT (suspend for MT-SDT)" in this embodiment of this application. For example, if the second information indicates the first CU-UP to send the downlink small data size information when the first CU-UP detects that the downlink small data arrives, the first value may be newly extended "suspend for MT-SDT", to explicitly indicate a "downlink". If the second information indicates the first CU-UP to send the small data size information when the first CU-UP detects that the downlink small data arrives, the first value may be existing "suspend for SDT". In other words, the first value may not need to indicate a "downlink". Optionally, if the value of the bearer context status change IE is neither the first value nor the second value, it indicates that the bearer context status change IE is not the second information.

In another optional implementation of the second information, if the method further includes S603, it may be considered that the second information indicates the first CU-UP to send the downlink small data size information, or it is considered that the second information is used to request the downlink small data size information. Alternatively, if the method does not include S603, that is, the first CU-CP does not send the second information to the first CU-UP, and the first CU-UP does not receive the second information from the first CU-CP, it may be considered that the second information indicates the first CU-UP not to send the downlink small data size information, or it is considered that the second information is not used to request the downlink small data size information. Alternatively, when the method does not include S603, the second information does not exist. Therefore, it may also be considered that an event that the first CU-CP does not send the second information or an event that the first CU-UP does not receive the second information indicates the first CU-UP not to send the downlink small data size information, or indicates that the downlink small data size information is not requested. Optionally, an IE may be included in the third message, and the second information may be included in the IE, so that the first CU-UP can determine, based on the added IE, that the IE includes the second information. If the third message does not include the IE, the first CU-UP determines that the second information is not received. Alternatively, the third message may be a newly defined message, and the message is dedicated to carrying the second information. In this case, the first CU-UP can determine, based on the third message, that the message includes the second information. If the first CU-UP does not receive the third message, the first CU-UP may determine that the second information is not received.

For example, the second information occupies one or more bits. If the first CU-CP sends the one or more bits, and/or the first CU-UP receives the one or more bits from the first CU-CP, it indicates that the second information indicates the first CU-UP to send the downlink small data size information, or indicates that the second information is used to request the downlink small data size information. Alternatively, if the first CU-CP does not send the one or more bits, and/or the first CU-UP does not receive the one or more bits from the first CU-CP, it indicates that the first CU-UP does not need to send the downlink small data size information, or indicates that the downlink small data size information is not requested.

For another example, the third message including the second information is, for example, a bearer context modification request message, and the bearer context modification request message includes a bearer context status change IE. If a value of the bearer context status change IE is a first value, it indicates that the bearer context status change IE is the second information. The first value may be an existing value of the bearer context status change IE, or a value newly extended for the bearer context status change IE in this embodiment of this application. For example, the first value may be existing "suspend for SDT", or may be newly extended "suspend for MT-SDT" in this embodiment of this application. For more examples, refer to the foregoing content related to the first value. For example, if the value of the bearer context status change IE is the first value, it indicates that the second information indicates the first CU-UP to send the downlink small data size information, or indicates that the second information is used to request the downlink small data size information. Alternatively, if the value of the bearer context status change IE is the first value, it indicates that the first CU-CP sends the second information, and the first CU-UP receives the second information. An event of sending or receiving the second information indicates the first CU-UP to send the downlink small data size information, or indicates that the second information is used to request the downlink small data size information. If the value of the bearer context status change IE is not the first value, it indicates that the bearer context status change IE is not the second information. In this case, it is considered that the first CU-CP does not send the second information, and the first CU-UP does not receive the second information from the first CU-CP. In this case, the second information indicates (or an event that the second information is not sent or received indicates) the first CU-UP not to send the downlink small data size information, or indicates that the downlink small data size information is not requested.

Optionally, the second information may further indicate that the UE has a capability of supporting small data transmission, for example, that the UE has a capability of supporting downlink small data transmission. For example, if the second information sent by the first CU-CP indicates that the UE supports small data transmission, the first CU-UP may determine to perform S602. For example, the second information occupies 1 bit (bit), and a value of the bit may be "0" or "1", or a value of the bit may be "true (true)" or "false (false)". If the value of the bit is "1" or "true", it indicates that the second information indicates that the UE supports small data transmission or the UE supports downlink small data transmission. Alternatively, the second information may occupy more bits. This is not specifically limited.

Optionally, the second information may further indicate whether the UE has small data transmission configuration information or indicate that the first CU-CP configures the small data transmission configuration information for the UE. For example, the small data transmission configuration information is downlink small data transmission configuration information. For example, if the second information sent by the first CU-CP indicates that the UE has the small data transmission configuration information or indicates that the first CU-CP configures the small data transmission configuration information for the UE, the first CU-UP may determine to perform S602. For example, the second information occupies 1 bit (bit), and a value of the bit may be "0" or "1", or a value of the bit may be "true (true)" or "false (false)". If the value of the bit is "1" or "true", it indicates that the second information indicates that the UE has the small data transmission configuration information, or indicates that the first CU-CP configures the small data transmission configuration information for the UE. Alternatively, the second information may occupy more bits. This is not specifically limited.

2. The second information includes a small data transmission configuration of the first CU-UP, for example, an SDT configuration.

For example, the first CU-CP configures the first CU-UP and the UE in a matched manner. For example, if the first CU-CP configures the small data transmission configuration for the first CU-UP, the first CU-CP also configures a small data transmission configuration for the UE. In other words, if the first CU-CP configures a small data transmission configuration for the UE, the first CU-CP also configures the small data transmission configuration for the first CU-UP. In this case, if the first CU-UP determines that the first CU-UP has the small data transmission configuration, the first CU-UP can determine that the UE also has the small data transmission configuration. Therefore, subsequent downlink small data may possibly be transmitted through the small data transmission procedure. Therefore, in this case, if the second information includes the small data transmission configuration of the first CU-UP, or the first CU-UP has the small data transmission configuration, the first CU-UP may send the downlink small data size information to the first CU-CP. The third message including the second information is, for example, a bearer context setup request (bearer context setup request) message. The bearer context setup request message is used by the first CU-CP to set up a bearer context on the first CU-UP.

Alternatively, in another case, the first CU-CP configures the first CU-UP and the UE in an unmatched manner. For example, the first CU-CP configures the small data transmission configuration for the first CU-UP, but does not necessarily configure a small data transmission configuration for the UE; or the first CU-CP configures a small data transmission configuration for the UE, but does not necessarily configure the small data transmission configuration for the first CU-UP. In this case, even if the first CU-UP determines that the first CU-UP has the small data transmission configuration, whether the UE has the small data transmission configuration cannot be determined. Therefore, in this case, the small data transmission configuration of the first CU-UP is not used as the second information. For example, the second information in this case may be implemented in the implementation 1. To be specific, the second information may indicate the first CU-UP to send the small data size information when the first CU-UP detects that the downlink small data arrives, or the second information may be used to request the small data size information when it is detected that the downlink small data arrives.

S604: The first CU-UP sends response information of the second information to the first CU-CP. Correspondingly, the first CU-CP receives the response information from the first CU-UP. The second information is included in the third message. For example, if the third message is the bearer context modification request message, the response information may be included in a bearer context modification response (bearer context modification response) message. For another example, if the third message is the bearer context setup request message, the response information may be included in a bearer context setup response (bearer context setup response) message. S604 is an optional step. For example, if the method includes S603, S604 may be performed. Alternatively, even if the method includes S603, the first CU-UP may not send the response information of the second information to the first CU-CP, that is, may not perform S604. Optionally, S604 may be performed before S602, may be performed after S602, or may be simultaneously performed with S602.

S605: The first CU-CP releases the UE.

There may be a plurality of cases in which the first CU-CP releases the UE. For example, in a case, the first CU-CP releases the UE from the RRC connected state to the RRC non-connected state. For another example, in another case, the first CU-CP directs the UE to the RRC non-connected state in which small data transmission is not performed. For another example, in still another case, the first CU-CP ends the small data transmission procedure for the UE.

For example, the first CU-CP may send a first F1 interface message to a first DU. The first F1 interface message may indicate the first DU to release the UE. The first F1 interface message is, for example, a UE context release command (UE context release command) message, or may be another message. After receiving the first F1 interface message, the first DU may send a RRC release (RRC release) message to the UE. After receiving the RRC release message, the UE may enter the RRC non-connected state. Through the foregoing process, the UE enters the RRC non-connected state in which small data transmission is not performed. Optionally, the first DU may further send a response message of the first F1 interface message to the first CU-CP. The response message is, for example, a UE context release complete (UE context release complete) message. S605 is an optional step. If the UE is originally in the RRC non-connected state in which no small data transmission is performed, S605 may not need to be performed.

S606: The first CU-UP receives (or detects) downlink data of the UE. Alternatively, the downlink data of the UE arrives at the first CU-UP.

S606 may occur immediately after S605, or S606 may occur after a period of time.

S607: The first CU-UP sends information about a first data size to the first CU-CP. Correspondingly, the first CU-CP receives the information about the first data size from the first CU-UP. The first data size is a data size of downlink data that arrives at the first CU-UP. Optionally, before S607, the first CU-UP may first determine whether the received (or detected) downlink data is data of an SDT DRB, or determine whether the downlink data is downlink small data. If the first CU-UP determines that the downlink data is the data of the SDT DRB, the first CU-UP sends the information about the first data size to the first CU-CP. In this case, the first data size is a data size of the downlink small data. For example, S606 and S607 may alternatively be a step. For example, the step includes: When receiving (or detecting) that the downlink small data of the UE arrives, the first CU-UP sends the information about the first data size to the first CU-CP. Correspondingly, the first CU-CP receives the information about the first data size from the first CU-UP. Alternatively, for example, the step includes: When receiving (or detecting) that the downlink data of the SDT DRB of the UE arrives, the first CU-UP sends the information about the first data size to the first CU-CP. Correspondingly, the first CU-CP receives the information about the first data size from the first CU-UP.

Alternatively, before S607, the first CU-UP may not determine whether the received (or detected) downlink data is data of the SDT DRB, but sends the information about the first data size to the first CU-CP, and the first CU-CP determines whether the downlink data is the data of the SDT DRB. To be specific, if the CU-CP determines whether the downlink data is the data of the SDT DRB, even if the first CU-UP does not determine whether the received downlink data is the data of the SDT DRB or whether the received downlink data is downlink small data, the first CU-UP may also send the information about the first data size to the first CU-CP. For example, the first CU-UP may send the information about the first data size to the first CU-CP based on an indication of the second information. Alternatively, this may not be associated with S602. To be specific, the first CU-UP may also autonomously send the information about the first data size to the first CU-CP when there is no second information. In this case, the first CU-UP does not determine whether the downlink data is downlink small data. Therefore, the first data size is a data size of the downlink data. For example, S606 and S607 may alternatively be a step. For example, the step includes: When receiving (or detecting) that the downlink data of the UE arrives, the first CU-UP sends the information about the first data size to the first CU-CP, and correspondingly, the first CU-CP receives the information about the first data size from the first CU-UP.

Optionally, S607 may be associated with S602. To be specific, if the first CU-UP determines, based on the second information, to send the downlink small data size information to the first CU-CP when the first CU-UP detects that the downlink small data arrives. In this case, in S607, the first CU-UP may send the information about the first data size to the first CU-CP. Alternatively, even if S602 is not performed, S607 may be performed. To be specific, the first CU-UP does not perform determining based on the second information, but may autonomously determine to send the information about the first data size to the first CU-CP.

For example, the information about the first data size is included in a fourth message. The fourth message may be an E1 interface message between the first CU-UP and the first CU-CP, and the fourth message may be an existing message, for example, a DL data notification message. Optionally, a new IE, for example, referred to as a first IE, may be introduced into the fourth message. The first IE may include the information about the first data size. Alternatively, the fourth message may be a newly defined message dedicated to sending data size information. Optionally, the fourth message may further include an identifier of an RB used for transmission of the downlink small data, so that the first CU-CP can determine specific SDT RBs over which downlink small data arrives.

Optionally, the fourth message may further include third information, and the third information may indicate a PDU session to notify list for small data transmission. For example, the third information is an IE including the PDU session to notify list. For example, the fourth message is an existing message. It may be understood that the IE, for example, referred to as a second IE, is newly introduced into the fourth message. The second IE may include the PDU session to notify list for small data transmission, for example, a PDU session to notify list for SDT (PDU Session To Notify List for SDT). For example, the fourth message is a DL data notification message. The DL data notification message originally also includes a PDU session to notify list, but the originally included PDU session to notify list is not dedicated to small data transmission. A function of the PDU session to notify list is as follows: The first CU-CP may map, to a corresponding RB based on the PDU session to notify list, a quality of service (quality of service, QoS) flow included in the PDU session to notify list. If the PDU session to notify list included in the fourth message is not dedicated to small data transmission, the first CU-CP does not know that the QoS flow included in the PDU session to notify list needs to be mapped to an SDT RB, and is likely to map the QoS flow included in the PDU session to notify list to a non-SDT RB. In this case, an error may occur in the downlink small data transmission. Therefore, in this embodiment of this application, the second IE may be newly introduced into the fourth message, so that the second IE includes the PDU session to notify list for small data transmission. The first CU-CP can map, to the SDT RB based on the second IE, the QoS flow included in the PDU session to notify list for small data transmission.

Alternatively, the fourth message may further indicate the first CU-CP to map a QoS flow included in the PDU session to notify list to an SDT RB. For example, if the fourth message is a newly defined message, the fourth message may include a PDU session to notify list, and the PDU session to notify list may be dedicated to small data transmission. The first CU-CP may map, to the SDT RB based on that the fourth message is a newly defined message, the QoS flow included in the PDU session to notify list included in the fourth message.

Alternatively, the first CU-CP may not need to determine, based on the fourth message (or the third information), specific RBs to which the QoS flow is mapped. For example, if the first CU-CP receives the information about the first data size, the first CU-CP can determine that to-be-transmitted downlink data is downlink small data. Therefore, the first CU-CP may map a QoS flow corresponding to the downlink small data to an SDT RB. In this manner, the fourth message needs to include only the information about the first data size, and no new message or IE needs to be defined, so that an implementation of the fourth message can be simplified.

As described above, the first CU-CP may determine whether the downlink data is the data of the SDT DRB. In this case, optionally, the fourth message may further indicate a QoS flow corresponding to the downlink small data. In this case, the first CU-CP may determine, based on the QoS flow included in the fourth message, whether the downlink data is the data of the SDT DRB. For example, the fourth message includes fourth information, and the fourth information may indicate a QoS flow corresponding to the downlink data, and/or indicate a data size of the downlink data (which is also referred to as a downlink data size for short below). For example, the fourth information includes a QoS flow item (item), and the QoS flow item includes at least one of a QoS flow identifier or downlink data size information (where the downlink data size information may indicate a downlink data size). Optionally, the fourth information may include a QoS flow item list, the QoS flow item list may include at least one QoS flow item, and each QoS flow item includes at least one of a QoS flow identifier or downlink data size information. In other words, the first CU-UP indicates, by using the fourth information, a downlink data size at a granularity of a QoS flow. If the fourth information includes a plurality of QoS flow items, the first CU-CP may add downlink data sizes indicated by the plurality of QoS flow items to obtain the first data size, where the plurality of QoS flow items are corresponding to SDT DRBs. Subsequently, when determining whether to initiate the small data transmission procedure or the downlink small data transmission procedure, the first CU-CP may perform determining based on the first data size. Optionally, if the first CU-CP includes data size information in the paging message, the data size information may be the information about the first data size. The paging message may include an F1 interface paging message, an Xn interface paging message, and/or the like.

Alternatively, as described above, the first CU-UP may determine whether the downlink data is the data of the SDT DRB. In this case, optionally, before sending the information about the first data size, the first CU-UP may first determine whether the received (or detected) downlink data is the data of the SDT DRB. If the downlink data is the data of the SDT DRB, the first CU-UP sends the information about the first data size to the first CU-CP. If the first CU-UP determines that the downlink data is data from a plurality of SDT DRBs or the downlink data is data from a plurality of QoS flows, the first CU-UP may further add sizes of the downlink data from the plurality of SDT DRBs or the plurality of QoS flows, and use an obtained result as the first data size. The first CU-UP sends a fourth message to the first CU-CP, where the fourth message includes fourth information, and the fourth information indicates the first data size (or includes the information about the first data size). The fourth information is, for example, a downlink small data arrival IE or an SDT data size IE. In other words, the first CU-UP indicates UE-level data size information by using the fourth information.

In some implementations, S607 is an optional step. For example, if there is no downlink small data currently, but there is signaling that can be transmitted through the downlink small data transmission procedure, the first CU-CP may not perform S607. In addition, S606 may be replaced with: The first CU-CP receives (or detects) downlink signaling of the UE. Alternatively, downlink signaling of the UE arrives at the first CU-CP.

After S607, for example, the first access network device determines to initiate the small data transmission procedure, or determines to initiate the downlink small data transmission procedure. In this case, the first access network device may send a paging message. The paging message may be used to page the UE. Optionally, before determining to initiate the small data transmission procedure or the downlink small data transmission procedure, the first access network device may further perform corresponding determining.

In an optional implementation of the determining process, the determining process is performed by the first CU-CP. For example, the first CU-CP may determine a relationship between the first data size and a second threshold. If the first data size is less than or equal to the second threshold, the first CU-CP may send the paging message to initiate the small data transmission procedure. If the first data size is greater than the second threshold, the first CU-CP may determine to direct the UE to the RRC connected state, and perform transmission of the downlink data or the downlink signaling. For example, the UE is in a coverage area of the first access network device. If the first CU-CP determines that the first data size is less than the second threshold, the first CU-CP may send the paging message to the first DU. The paging message is, for example, an F1 interface paging message. Optionally, the F1 interface paging message may include an identifier of the UE, and may further include a small data transmission indication, for example, an sdt indication or an mt-sdt indication. After receiving the F1 interface paging message, the first DU may broadcast a paging message, for example, broadcast a RAN paging message. Optionally, the RAN paging message may include the identifier of the UE, and may further include the small data transmission indication, for example, the sdt indication or the mt-sdt indication.

Alternatively, the UE may not be in a coverage area of the first access network device, but may be in a coverage area of another access network device. In this case, the first CU-CP may further send a paging message to the another access network device, to page the UE. The another access network device may include a part or all of access network devices belonging to a same RNA as the first access network device. For example, the another access network device includes the second access network device. An interaction process between the first CU-CP and the second access network device is used as an example. For example, the first CU-CP may send a paging message to the second access network device, the paging message is, for example, an Xn interface paging message, and the paging message may include the first data size. Optionally, the paging message may further include an identifier of an RB used for transmission of the downlink small data, so that the second access network device can determine specific SDT RBs over which downlink small data arrives. The second access network device may determine a relationship between the first data size and a second threshold. The second threshold may be a threshold used by the second access network device to determine whether to initiate the small data transmission. For example, if the first data size is less than or equal to the second threshold, the second access network device may send the paging message to initiate the small data transmission procedure. If the first data size is greater than the second threshold, the second access network device may determine to direct the UE to the RRC connected state, and perform transmission of the downlink data or the downlink signaling. If the second access network device is in a distributed structure, the first CU-CP may send the Xn interface paging message to a second CU-CP included in the second access network device. If the second access network device is in the distributed structure, the second CU-CP may send an F1 interface paging message to a second DU. Optionally, the F1 interface paging message may include an identifier of the UE and a downlink small data transmission indication. After receiving the F1 interface paging message, the second DU may broadcast a paging message, for example, broadcast a RAN paging message. Optionally, the RAN paging message may include the identifier of the UE, and may further include the small data transmission indication, for example, an sdt indication or an mt-sdt indication.

Optionally, if the first CU-CP detects downlink signaling (which, for example, may also be referred to as downlink small data signaling), the first CU-CP may further perform determining based on a sum of the first data size and a data size of the downlink signaling, that is, determine a relationship between the second threshold and the sum of the first data size and the data size of the downlink signaling. Optionally, if the first CU-CP includes data size information in the paging message, a data size corresponding to the data size information may be the sum of the first data size and the data size of the downlink signaling. The paging message may include an Xn interface paging message and the like. In other words, after the second access network device receives information indicating the sum of the first data size and the data size of the downlink signaling, the second access network device may also perform determining based on the information, that is, determine the relationship between the second threshold and the sum of the first data size and the data size of the downlink signaling. For a determining manner, refer to the foregoing descriptions.

In another optional implementation of the determining process, the determining process may alternatively be performed by the first DU. For example, after S607, the first CU-CP may send an F1 interface paging message to the first DU. Optionally, the F1 interface paging message may include an identifier of the UE, and may further include the information about the first data size and the like. The first DU may determine a relationship between the first data size and a second threshold. If the first data size is less than or equal to the second threshold, the first DU may send a paging message to initiate the small data transmission procedure. If the first data size is greater than the second threshold, the first DU may notify the first CU-CP. Then, the first CU-CP directs the UE to the RRC connected state. For example, the UE is in a coverage area of the first access network device. If the first DU determines that the first data size is less than the second threshold, the first DU may broadcast the paging message, for example, broadcast a RAN paging message. The RAN paging message may include the identifier of the UE, and may further include a small data transmission indication, for example, an sdt indication or an mt-sdt indication.

Alternatively, the UE may not be in the coverage area of the first access network device, but may be in a coverage area of another access network device. In this case, the first CU-CP may further send a paging message to the another access network device, to page the UE. The paging message may include the information about the first data size. The another access network device may include a part or all of access network devices belonging to a same RNA as the first access network device. The another access network device may determine the relationship between the first data size and the second threshold. For the process, refer to the foregoing descriptions.

Optionally, if the first CU-CP detects downlink signaling (which, for example, may also be referred to as downlink small data signaling), the first CU-CP may further obtain a sum of the first data size and a data size of the downlink signaling through calculation. Optionally, if the first CU-CP includes data size information in the paging message, a data size corresponding to the data size information may be the sum of the first data size and the data size of the downlink signaling. The paging message may include an F1 interface paging message, an Xn interface paging message, and the like. In other words, after the first DU or the second access network device receives information indicating the sum of the first data size and the data size of the downlink signaling, the first DU or the second access network device may perform determining based on the information, that is, determine a relationship between the second threshold and the sum of the first data size and the data size of the downlink signaling. For a determining manner, refer to the foregoing descriptions.

In the foregoing description process, for a scenario in which the UE moves to a new access network device, an example in which the first access network device indicates the first data size in the Xn interface paging message, and the another access network device in the same RNA further determines whether to initiate the small data transmission procedure or the downlink small data transmission procedure is used. Alternatively, in another possibility, the first access network device has exchanged the second threshold with the another access network device (for example, an access network device on which the UE currently camps, where the second access network device is used as an example). In other words, if the first access network device knows the second threshold, the first access network device may determine, based on the first data size and the second threshold, whether the second access network device initiates the small data transmission. If the first access network device determines that the second access network device can initiate the small data transmission, the first access network device may send the paging message to the second access network device to page the UE. The paging message may include the small data transmission indication, and the small data transmission indication is, for example, the mt-sdt indication. After receiving the mt-sdt indication, the second access network device may not need to perform the step of determining whether to initiate the small data transmission procedure, but may send the RAN paging message to page the UE to initiate the small data transmission procedure. The first access network device and the second access network device are in the same RNA. After receiving the RAN paging message from the access network device (for example, the first access network device or the second access network device), the UE may perform a step related to small data transmission. For example, the UE may initiate a RRC connection resume procedure used for small data transmission or downlink small data transmission. That the UE initiates the RRC connection resume procedure used for (downlink) small data transmission may include: The UE sends a RRC request message to the access network device, and the access network device receives the RRC request message. For example, the RRC request message is a RRC connection resume request (RRC connection resume request) message. Optionally, the RRC request message may further include information indicating the UE to initiate the small data transmission or the downlink small data transmission. Optionally, the UE may send the RRC request message to the DU, and the DU may receive the RRC request message. If the UE is still in the coverage area of the first access network device after being released by the first access network device to the RRC non-connected state last time, the UE sends the RRC request message to the first DU; or if the UE moves to a coverage area of the another access network device (for example, the second access network device) after being released by the first access network device to the RRC non-connected state last time, the UE sends the RRC request message to the second DU.

Optionally, before initiating the small data transmission procedure or the downlink small data transmission procedure, the UE may further perform corresponding determining. Optionally, the UE may determine whether received signal quality of the UE is greater than or equal to a third threshold, and/or determine whether a data size of uplink data is less than or equal to a fourth threshold. For example, the received signal quality of the UE is measured by using a parameter, for example, reference signal received power (reference signal received power, RSRP), reference signal received quality (reference signal received quality, RSRQ), or a signal to interference plus noise ratio (signal to interference plus noise ratio, SINR).

If the received signal quality of the UE is greater than or equal to the third threshold, it indicates that channel quality of the UE is good, and can support the data transmission procedure in the RRC non-connected state. Therefore, the UE may initiate the small data transmission procedure or the downlink small data transmission procedure. If the received signal quality of the UE is less than the third threshold, it indicates that channel quality of the UE is poor, and may not support the data transmission procedure in the RRC non-connected state. Therefore, the UE may not initiate the small data transmission procedure or the downlink small data transmission procedure.

The uplink data is uplink data to be sent by the UE. In the downlink small data transmission procedure, the uplink small data of the UE may also be transmitted. If the data size of the uplink data is greater than the fourth threshold, it indicates that the uplink data cannot be transmitted through the small data transmission procedure, and the UE should enter the RRC connected state for transmission. Therefore, the UE may not initiate the small data transmission procedure or the downlink small data transmission procedure. For example, the UE may request to enter the RRC connected state. Alternatively, if the data size of the uplink data is less than or equal to the fourth threshold, it indicates that the uplink small data can be transmitted through the small data transmission procedure, and the UE may initiate the small data transmission procedure or the downlink small data transmission procedure.

Optionally, the foregoing determining process before the UE initiates the small data transmission procedure or the downlink small data transmission procedure may be performed by a MAC layer of the UE. Before the MAC layer performs determining, the MAC layer may further receive indication information, for example, referred to as indication information B, from a RRC layer of the UE. The indication information B may indicate the MAC layer to perform determining related to the uplink small data transmission, or perform determining related to the downlink small data transmission. Optionally, the determining process may further include a resource selection process, for example, a process in which the MAC layer selects a resource used to initiate the small data transmission procedure or the downlink small data transmission procedure. For example, the MAC layer may select a normal random access resource, or select a random access resource used for small data transmission, or select a preconfigured small data transmission resource. If selecting the normal random access resource or the random access resource used for small data transmission, the UE may send the RRC request message via the access network device (for example, the first access network device or the second access network device) and by using a resource scheduled based on a random access response. Alternatively, if selecting the preconfigured small data transmission resource, the UE may send the RRC request message by using the preconfigured small data transmission resource. Different from determining performed by the UE after the UE receives the RAN paging message and before the UE initiates the small data transmission procedure or the downlink small data transmission procedure, if the UE performs corresponding determining after the uplink data arrives, when selecting a resource used to initiate a small data transmission procedure or an uplink small data transmission procedure, the MAC layer can select only the random access resource used for small data transmission or the preconfigured small data transmission resource, and cannot select the normal random access resource. It can be learned that the MAC layer performs different determining in the foregoing two cases (a case in which the UE receives the RAN paging message related to the downlink small data and a case in which the uplink data arrives at the UE), and the RRC layer can learn of which one of the foregoing two cases currently occurs. Therefore, the RRC layer may send the indication information B to the MAC layer, to indicate which type of determining is to be performed by the MAC layer. It can be learned that a determining process of the MAC layer may be more accurate based on an indication of the RRC layer. In addition, the MAC layer may perform different determining processes (for example, perform different resource selection processes) based on different small data transmission procedures, so that a determining result (for example, a resource selection result) can meet a scenario of a corresponding small data transmission procedure.

S608: The first DU sends the RRC request message to the first CU-CP. Correspondingly, the first CU-CP receives the RRC request message from the first DU.

If the UE sends the RRC request message to the first DU, the first DU may send an F1 interface message, for example, referred to as a second F1 interface message, to the first CU-CP. The second F1 interface message may include the RRC request message. For example, the second F1 interface message may be an initial uplink RRC message transfer (initial UL RRC message transfer) message, an uplink RRC message transfer (UL RRC message transfer) message, or the like. Alternatively, if the UE sends the RRC request message to the second DU, S608 may be replaced with: The second DU sends the RRC request message to the second CU-CP. Correspondingly, the second CU-CP receives the RRC request message from the second DU. For example, the second DU sends an F1 interface message, for example, referred to as a second F1 interface message, to the second CU-CP, and the second F1 interface message may include the RRC request message. For example, the second F1 interface message may be an initial UL RRC message transfer message, an UL RRC message transfer message, or the like.

It may be understood that if the UE has moved to a range of a new station, for example, moved to the coverage area of the second access network device, the second access network device receives the RRC request message from the UE. If the second access network device has a distributed architecture, a DU of the second access network device may send the second F1 interface message to a CU of the second access network device. If the UE does not move to a range of a new station, for example, the UE still camps on the first access network device, the first access network device receives the RRC request message from the UE. If the first access network device has a distributed architecture, a DU of the first access network device may send the second F1 interface message to a CU of the first access network device.

Optionally, the first CU-CP (or the second CU-CP) may further learn of, based on the second F1 interface message, whether the small data transmission procedure or the downlink small data transmission procedure is currently initiated. For example, the second F1 interface message includes an sdt indication or an mt-sdt indication, and the first CU-CP or the second CU-CP may determine, based on the sdt indication or the mt-sdt indication, whether the small data transmission procedure or the downlink small data transmission procedure is currently initiated.

S609: The first CU-CP sends a fifth message to the first DU. Correspondingly, the first DU receives the fifth message from the first CU-CP. The fifth message is, for example, an F1 interface message between the first CU-CP and the first DU, and is referred to as, for example, a third F1 interface message.

Optionally, S609 is performed only when the second F1 interface message in S608 is the initial UL RRC message transfer. Alternatively, regardless of a type of the second F1 interface message in S608, S609 may be performed.

If S608 is that the first DU sends the RRC request message to the first CU-CP, S609 may be performed; or if S608 is that the second DU sends the RRC request message to the second CU-CP, S609 may be replaced with: The second CU-CP sends the fifth message to the second DU. Correspondingly, the second DU receives the fifth message from the second CU-CP.

The fifth message may be used to request to set up a context of the UE, for example, request to set up a context of an RB of the UE, where the RB is an SDT RB. For example, the fifth message may be a UE context setup request (UE context setup request) message. Optionally, after receiving the fifth message, the first DU (or the second DU) may further send a response to the fifth message to the first CU-CP (or the second CU-CP). The response is, for example, a UE context setup response (UE context setup response) message.

Optionally, the fifth message may be used to request to set up a partial or entire context of all SDT RBs of the UE, or the fifth message may be used to request to set up a partial or entire context of an SDT RB that is of the UE and that is used for transmission of the downlink small data. For example, in this embodiment of this application, downlink small data arriving at the first CU-UP may be transmitted over a part or all of the SDT RBs of the UE, and the fifth message may be used to request to set up a partial or entire context of the SDT RBs for transmission of the downlink small data. A context of an SDT RB not used for transmission of the downlink small data may not be requested to be set up. In this way, a process of setting up the context of the SDT RBs can be simplified.

For example, the third F1 interface message may include a third IE, the third IE may include an identifier of a to-be-set-up RB, and the to-be-set-up RB may include a DRB used for transmission of the downlink small data, and/or include an SRB used for transmission of downlink signaling of the UE. Optionally, the third IE may further include configuration information of the to-be-set-up RB. Alternatively, an identifier of a to-be-set-up DRB and an identifier of a to-be-set-up SRB may be separately included in different IEs, and the different IEs may further separately include configuration information of the to-be-set-up DRB or SRB. The third F1 interface message is equivalent to indicating, by using these IEs, to request to set up a partial or entire context of these RBs. This embodiment of this application is mainly described by using the downlink small data as an example.

If S608 is replaced with that the second DU sends the RRC request message to the second CU-CP, it indicates that the UE has moved to the second access network device. The second access network device is not an anchor access network device of the UE. Therefore, the second CU-CP does not store information like a context of the UE. As a result, S609 cannot be performed. Optionally, if the UE moves to the second access network device, after S608 and before S609, the second access network device (for example, the second CU-CP) may send a sixth message to the first CU-CP. The sixth message may be used to request to obtain the context of the UE. The sixth message may be an Xn interface message, for example, a retrieve UE context request (retrieve UE context request) message. After receiving the sixth message, the first CU-CP may determine whether to change the anchor access network device for the UE. If the anchor access network device is changed, the first CU-CP may send the entire context of the UE to the second access network device (for example, the second CU-CP); or if the anchor access network device is not changed, the first CU-CP may send a partial context of the UE to the second access network device (for example, the second CU-CP). Optionally, the first CU-CP may send a response message of the sixth message to the second access network device. The response message of the sixth message may include a corresponding context that is of the UE and that is sent by the first CU-CP to the second access network device. The response message is, for example, a retrieve UE context response (retrieve UE context response) or a partial UE context transfer (partial UE context transfer) message. If the first access network device is not in the distributed structure, the second access network device may interact with the first access network device instead of interacting with the first CU-CP. If the second access network device is not in the distributed structure, the first access network device may interact with the second access network device instead of interacting with the second CU-CP.

For example, if the anchor access network device is changed, the first CU-CP may send all of a context of all RBs of the UE to the second access network device, or send all of a context of all SDT RBs of the UE to the second access network device. Alternatively, if the anchor access network device is not changed, the first CU-CP may send a partial or entire context of all the SDT RBs of the UE to the second access network device, or may send, to the second access network device, a partial or entire context of an SDT RB that is of the UE and that is used for transmission of the downlink small data (or the downlink signaling). If the first CU-CP sends a partial context of an RB of the UE to the second access network device, for example, the first CU-CP may send an RLC configuration and the like of the RB to the second access network device, but may not send another configuration of the RB.

In this embodiment of this application, when the anchor access network device is not changed, the first access network device may send, to the second access network device, the partial or entire context of the SDT RB used for transmission of the downlink small data, and does not need to send the partial or entire context of all the SDT RBs of the UE to the second access network device. In this way, transmission overheads can be reduced.

After a process of transmitting, setting up, or resuming the context of the UE or another process is completed, the first access network device may send the downlink small data to the UE, or transmission of the downlink small data of the UE starts. If the UE is in the coverage area of the first access network device, the first access network device (for example, the first CU-UP) may directly send the downlink small data to the UE. Alternatively, if the UE is in the coverage area of the second access network device, and the first access network device determines not to change the anchor access network device, the first access network device may send the downlink small data to the second access network device, and the second access network device sends the downlink small data to the UE. Alternatively, if the UE is in the coverage area of the second access network device, and the first access network device determines to change the anchor access network device, the second access network device may send the downlink small data to the UE. S609 may be associated with S602 and S607. For example, if the first CU-UP determines, based on the second information, to send the downlink small data size information to the first CU-CP when the first CU-UP detects that the downlink small data arrives, in S607, the first CU-UP may send the information about the first data size to the first CU-CP, and in S609, the fifth message may request to set up the entire or partial context of all the SDT RBs of the UE, or request to set up the entire or partial context of the SDT RB used for transmission of the downlink small data. Alternatively, S609 may be associated with S602 but not with S607. For example, if the first CU-UP determines, based on the second information, to send the downlink small data size information to the first CU-CP when the first CU-UP detects that the downlink small data arrives, S607 may or may not be performed. Even if S607 is performed, S607 may not be performed depending on S602. In S609, the fifth message may request to set up the entire or partial context of all the SDT RBs of the UE, or request to set up the entire or partial context of the SDT RB used for transmission of the downlink small data. That S607 is not performed may include a case in which there is only downlink signaling (for example, downlink small data signaling) but no downlink small data. For example, an AMF has downlink small data signaling, and a UPF has no downlink small data. Alternatively, S609 may be associated with S607 but not with S602. For example, S602 is not performed. In S607, the first CU-UP may send the information about the first data size to the first CU-CP. In S609, the fifth message may request to set up the entire or partial context of all the SDT RBs of the UE, or request to set up the entire or partial context of the SDT RB used for transmission of the downlink small data.

Alternatively, S609 is not associated with S602 and S607. For example, even if neither S602 nor S607 is performed, S609 may still be performed. In S609, the fifth message may request to set up the entire or partial context of all the SDT RBs of the UE, or request to set up the entire or partial context of the SDT RB used for transmission of the downlink small data.

Optionally, after receiving the fifth message, the first DU may send a response message of the fifth message to the first CU or the first CU-CP. For example, the fifth message is a UE context setup request message, and the response message may be a UE context setup response (UE context setup response) message. For example, the response message may include result information. The result information may indicate whether the context of the UE that is requested to be set up by the fifth message is successfully set up, for example, indicate whether the context of the SDT RB that is requested to be set up based on the fifth message is successfully set up. The SDT RB indicated by the result information may include all the SDT RBs of the UE, or include an SDT RB that is of the UE and at which downlink small data and/or downlink signaling arrives. For example, the result information includes one or more of a "DRB setup list IE", a "DRB setup failure list IE", an "SRB setup list IE", or an "SRB setup failure list IE". For example, the "DRB setup list IE" may include an identifier of a DRB that is successfully set up in the SDT RB requested by the fifth message, the "DRB setup failure list IE" may include an identifier of a DRB that fails to be set up in the SDT RB requested by the fifth message, the "SRB setup list IE" may include an identifier of an SRB that is successfully set up in the SDT RB requested by the fifth message, and the "SRB setup failure list IE" may include an identifier of an SRB that fails to be set up in the SDT RB requested by the fifth message.

S610: The first CU-UP sends first indication information to the first CU-CP. Correspondingly, the first CU-CP receives the first indication information from the first CU-UP. The first indication information may indicate that there is no further data, or indicate to end the small data transmission, or indicate to end the downlink small data transmission, or indicate to stop data transmission, where the stopping data transmission includes, for example, stopping downlink data transmission. For example, the first indication information is included in an E1 interface message between the first CU-UP and the first CU-CP, and the E1 interface message is, for example, a bearer context inactivity indication (bearer context inactivity notification) message. The first indication information is, for example, an SDT end indication included in the E1 interface message, and the first CU-CP may end a current small data transmission process or downlink small data transmission process based on the first indication information.

S611: A core network device sends first indication information to the first CU-CP. Correspondingly, the first CU-CP receives the first indication information from the core network device. The core network device is, for example, an AMF, or may be another device in a core network. The first indication information may indicate that there is no further data, or indicate to end the small data transmission, or indicate to end the downlink small data transmission, or indicate to stop data transmission and/or stop signaling transmission, where the stopping data transmission includes, for example, stopping downlink data transmission, and the stopping signaling transmission includes, for example, stopping downlink signaling (or downlink small data signaling) transmission.

The first indication information may be included in an NG interface message between the core network device and the first CU-CP. The NG interface message is, for example, a downlink non-access stratum transport (downlink NAS transport) message. For example, the NG interface message includes a fourth IE, and the fourth IE includes an end indication (end indication). The end indication may be considered as the first indication information, or the fourth IE may be considered as the first indication information. If the first CU-CP receives the first indication information from the core network device, the first CU-CP may determine that the core network device has no further data or signaling to be sent to the UE. Therefore, the first CU-CP may end the current small data transmission procedure or downlink small data transmission procedure for the UE. S611 is not limited to the downlink small data transmission procedure of the UE, and may be further used in an uplink small data transmission process performed by the UE when the UE needs to perform transmission of uplink small data.

Both S610 and S611 may occur, and a sequence is not limited. Alternatively, only one of S610 and S611 may occur.

In this embodiment of this application, S602, S607, S609, and S610 and/or S611 may be considered as four processes, and the four processes may be associated. Alternatively, any plurality of processes in the four processes may be associated, and a remaining process is unrelated to the plurality of processes. For example, S602 is associated with S607, both S602 and S607 are unrelated to S609, and S602 and S607 are also unrelated to S610 and/or S611. Alternatively, the four processes may not be associated with each other, but are four independent processes. That two processes are associated may be understood as that both the two processes are performed, and execution of one process is related to the other process. For example, S602 is associated with S607. In this case, if S602 is not performed, S607 may not be performed. If S602 is performed, and if it is determined that the downlink data size information is to be sent to the first CU-CP in S602, S607 may be performed. For another example, if S602 is associated with S609, S609 may be performed after S602.

That two processes are not associated may be understood as that execution of one process is unrelated to the other process. For example, S602 is not associated with S607. In this case, regardless of whether S602 is performed, S607 may be performed, or S607 may not be performed. In other words, whether S607 is performed, content of S607, and the like are unrelated to S602. In this embodiment of this application, the first CU-UP may determine, based on the second information, whether to send the downlink small data size information to the first CU-CP. This is equivalent to a case in which the first CU-UP determines, after performing measurement based on a corresponding factor, whether to send the downlink small data size information to the first CU-CP. For example, when the first CU-CP does not need the downlink small data size information, the downlink small data size information does not need to be sent. This reduces transmission processes of redundant information, and helps reduce power consumption of the access network device.

Optionally, the embodiment shown in FIG. 6 may be combined with the embodiment shown in FIG. 5. For example, the small data transmission process in the embodiment shown in FIG. 5 may include the small data transmission process provided in the embodiment shown in FIG. 6. After S601 to S608 in the embodiment shown in FIG. 6 are performed, or after S606 to S608 in the embodiment shown in FIG. 6 are performed, the embodiment shown in FIG. 5 may be performed. If the embodiment shown in FIG. 6 is associated with the embodiment shown in FIG. 5, for differentiation, the downlink small data in the embodiment shown in FIG. 5 may be referred to as first downlink small data, and the downlink small data (for example, downlink small data arriving in the small data transmission process) in the embodiment shown in FIG. 6 may be referred to as second downlink small data. Alternatively, the embodiment shown in FIG. 6 may not be combined with the embodiment shown in FIG. 5. The small data transmission process in the embodiment shown in FIG. 5 may include an uplink small data transmission process and/or a downlink small data transmission process, and the downlink small data transmission process may not be performed in the manner provided in the embodiment shown in FIG. 6.

In a description process of embodiments of this application, an example in which a first access network device is in a distributed architecture and the first access network device includes a first CU-CP, a first CU-UP, and a first DU is used.

Alternatively, it is possible that although the first access network device is in the distributed architecture, the first access network device may include a first CU and a first DU, and the first CU is not further divided into the first CU-CP and the first CU-UP. In this case, both the steps performed by the first CU-CP and the steps performed by the first CU-UP in embodiments of this application may be performed by the first CU, and an interaction process between the first CU-CP and the first CU-UP may not be performed, and is implemented inside the first CU. Alternatively, the first access network device may not be in the distributed architecture, but may exist as a whole. In this case, the steps performed by the first CU-CP, the steps performed by the first CU-UP, and the steps performed by the first DU in embodiments of this application are all performed by the first access network device as a whole. An interaction process between the first CU-CP, the first CU-UP, and the first DU may not be performed, but is implemented inside the first access network device.

A second access network device also has the foregoing several optional architectures, and an implementation of the second access network device is similar to that of the first access network device. In addition, an architecture of the first access network device may be the same as an architecture of the second access network device. For example, the architecture is a distributed architecture including a CU-CP, a CU-UP, and a DU. Alternatively, an architecture of the first access network device may be different from an architecture of the second access network device. For example, the first access network device includes the first CU-CP, the first CU-UP, and the first DU, but the second access network device is not in a distributed architecture.

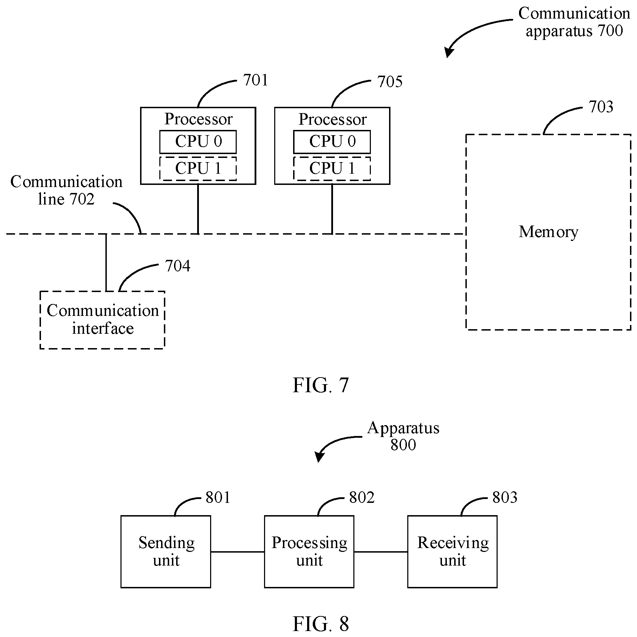

FIG. 7 is a diagram of a structure of a communication apparatus according to an embodiment of this application. The communication apparatus 700 may be the first CU-CP or a circuit system of the first CU-CP in the embodiment shown in FIG. 5 or FIG. 6, and is configured to implement the method corresponding to the first CU-CP in the foregoing method embodiment. Alternatively, the communication apparatus 700 may be the first CU-UP or a circuit system of the first CU-UP in the embodiment shown in FIG. 5 or FIG. 6, and is configured to implement the method corresponding to the first CU-UP in the foregoing method embodiment. Alternatively, the communication apparatus 700 may be the second CU-CP or a circuit system of the second CU-CP in the embodiment shown in FIG. 5 or FIG. 6, and is configured to implement the method corresponding to the second CU-CP in the foregoing method embodiment. For a specific function, refer to the descriptions of the foregoing method embodiment. For example, the circuit system is a chip system.

The communication apparatus 700 includes at least one processor 701. The processor 701 may be configured to perform internal processing of the apparatus, to implement a specific control processing function. Optionally, the processor 701 includes instructions. Optionally, the processor 701 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 700 includes one or more memories 703, configured to store instructions. Optionally, the memory 703 may further store data. The processor and the memory may be separately disposed, or may be integrated together.

Optionally, the communication apparatus 700 includes a communication line 702 and at least one communication interface 704. Because the memory 703, the communication line 702, and the communication interface 704 are all optional, the memory 703, the communication line 702, and the communication interface 704 are all represented by dashed lines in FIG. 7.

Optionally, the communication apparatus 700 may further include a transceiver and/or an antenna. The transceiver may be configured to: send information to another apparatus, or receive information from another apparatus. The transceiver may be referred to as a transceiver machine, a transceiver circuit, an input/output interface, or the like, and is configured to implement a sending/receiving function of the communication apparatus 700 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 701 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 702 may include a path, to transfer information between the foregoing components.

The communication interface 704 uses any apparatus like a transceiver, and is configured to communicate with another device or a communication network, for example, Ethernet, a radio access network (radio access network, RAN), a wireless local area network (wireless local area network, WLAN), or a wired access network.

The memory 703 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc storage, optical disk storage (including a compressed optical disc, a laser disc, an optical disc, a digital versatile optical disc, a Blu-ray disc, and the like), magnetic disk storage medium or another magnetic storage device, or any other medium that can carry or store expected program code in an instruction or data structure form and can be accessed by a computer, but is not limited thereto. The memory 703 may exist independently and is connected to the processor 701 through the communication line 702.

Alternatively, the memory 703 may be integrated with the processor 701.

The memory 703 is configured to store computer-executable instructions for executing the solutions of this application, and the processor 701 controls the execution. The processor 701 is configured to execute the computer-executable instructions stored in the memory 703, to implement the communication method provided in the foregoing embodiment of this application. Optionally, the computer-executable instructions in this embodiment of this application may also be referred to as application program code. This is not specifically limited in this embodiment of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and a processor 705 in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 7 is a chip, for example, a chip of the first CU-UP, a chip of the first CU-CP, or a chip of the second CU-CP, the chip includes the processor 701 (and may further include the processor 705), the communication line 702, the memory 703, and the communication interface 704. Specifically, the communication interface 704 may be an input interface, a pin, a circuit, or the like. The memory 703 may be a register, a cache, or the like. The processor 701 and the processor 705 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when each functional module is obtained through division based on each corresponding function, FIG. 8 is a diagram of an apparatus. The apparatus 800 may be the first CU-UP, the first CU-CP, or the second CU-CP in the foregoing method embodiments, or a chip in the first CU-UP, a chip in the first CU-CP, or a chip in the second CU-CP. The apparatus 800 includes a sending unit 801, a processing unit 802, and a receiving unit 803.

It should be understood that the apparatus 800 may be configured to implement the steps performed by the first CU-CP, the first CU-UP, or the second CU-CP in the method in embodiments of this application. For related features, refer to the foregoing embodiments. Details are not described herein again.

Optionally, functions/implementation processes of the sending unit 801, the receiving unit 803, and the processing unit 802 in FIG. 8 may be implemented by the processor 701 in FIG. 7 by invoking the computer-executable instructions stored in the memory 703. Alternatively, a function/an implementation process of the processing unit 802 in FIG. 8 may be implemented by the processor 701 in FIG. 7 by invoking the computer-executable instructions stored in the memory 703, and functions/implementation processes of the sending unit 801 and the receiving unit 803 in FIG. 8 may be implemented through the communication interface 704 in FIG. 7.

Optionally, when the apparatus 800 is a chip or a circuit, functions/implementation processes of the sending unit 801 and the receiving unit 803 may alternatively be implemented by a pin, a circuit, or the like.

This application further provides a computer-readable storage medium. The computer-readable storage medium stores a computer program or instructions. When the computer program or the instructions are run, the method performed by the first CU-CP, the first CU-UP, or the second CU-CP in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the first CU-CP, the first CU-UP, or the second CU-CP in any one of the foregoing method embodiments.

An embodiment of this application further provides a processing apparatus, including a processor and an interface. The processor is configured to perform the method performed by the first CU-CP, the first CU-UP, or the second CU-CP in any one of the foregoing method embodiments.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. Various illustrative logic units and circuits described in embodiments of this application may implement or operate the described functions by designing a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or a storage medium in any other form in the art. For example, the storage medium may be connected to a processor, so that the processor may read information from the storage medium and write information to the storage medium. Alternatively, the storage medium may be integrated into a processor. The processor and the storage medium may be disposed in an ASIC, and the ASIC may be disposed in a terminal device. Optionally, the processor and the storage medium may also be disposed in different parts of the terminal device.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. It is clear that a person skilled in the art may make various modifications and variations to embodiments of this application without departing from the scope of embodiments of this application. In this way, embodiments of this application are intended to cover these modifications and variations of embodiments of this application provided that they fall within the scope of the claims of this application and equivalent technologies.

## Claims

1. A communication method, applied to a first central unit control plane, wherein the method comprises:
receiving first information from a first central unit user plane in a process of small data transmission between a first access network device and a terminal device, wherein the first information is information related to downlink data of the terminal device; and
sending a first message based on the first information, wherein the first message indicates to direct the terminal device to a radio resource control RRC connected state, wherein
the first central unit control plane and the first central unit user plane are located in the first access network device.

2. The method according to claim 1, wherein the downlink data comprises first downlink small data or downlink non-small data.

3. The method according to claim 2, wherein the downlink data comprises the first downlink small data; and
the first information indicates that a data size of the first downlink small data is greater than or equal to a first threshold, wherein
the first downlink small data comprises downlink small data of all radio bearers of the terminal device for small data transmission, the first threshold is a data size threshold corresponding to the terminal device or the first threshold is a data size threshold shared by a plurality of terminal devices, and the terminal device is one of the plurality of terminal devices; or
the first downlink small data comprises downlink small data of a first radio bearer of the terminal device, the first threshold is a data size threshold corresponding to the first radio bearer, and the first radio bearer is used for small data transmission;
or
the first information indicates a data size of the first downlink small data.

4. The method according to claim 3, wherein when the first information indicates the data size of the first downlink small data, the method further comprises:
determining that the data size of the first downlink small data is greater than or equal to a first threshold, wherein
the first downlink small data comprises downlink small data of all radio bearers of the terminal device for small data transmission, the first threshold is a data size threshold corresponding to the terminal device or the first threshold is a data size threshold shared by a plurality of terminal devices, and the terminal device is one of the plurality of terminal devices; or
the first downlink small data comprises downlink small data of a first radio bearer of the terminal device, the first threshold is a data size threshold corresponding to the first radio bearer, and the first radio bearer is used for small data transmission.

5. The method according to claim 3 or 4, wherein
the first threshold is comprised in an interface setup request message or an interface setup response message, wherein the interface setup request message is used to request setup of a connection between the first central unit control plane and the first central unit user plane, the interface setup response message is used to acknowledge the setup of the connection, the first threshold is the data size threshold shared by the plurality of terminal devices, and the terminal device is one of the plurality of terminal devices; or
the first threshold is comprised in a bearer context setup request message, wherein the bearer context setup request message is used to request setup of a radio bearer context of the terminal device, and the first threshold is the data size threshold corresponding to the terminal device or the first radio bearer.

6. The method according to claim 2, wherein the downlink data comprises the downlink non-small data; and
the first information indicates arrival of the downlink non-small data, wherein the downlink non-small data comprises downlink non-small data of all radio bearers of the terminal device for non-small data, or comprises downlink non-small data of a second radio bearer of the terminal device, and the second radio bearer is used for non-small data transmission.

7. The method according to claim 6, wherein the first information is comprised in a second message, the first information comprises an identifier of at least one radio bearer of the terminal device and indicates a protocol data unit PDU session to notify list for small data transmission, and the at least one radio bearer is used for non-small data transmission.

8. The method according to any one of claims 1 to 7, wherein the method further comprises:
sending second information to the first central unit user plane; and
receiving information about a first data size from the first central unit user plane, wherein the first data size is a data size of second downlink small data.

9. The method according to claim 8, wherein
the second information is comprised in a third message, wherein
the second information indicates that the terminal device has a capability of supporting small data transmission; or
the second information indicates that the terminal device has a capability of supporting downlink small data transmission; or
the second information indicates that the terminal device has small data transmission configuration information; or
the second information indicates that the first central unit control plane has configured small data transmission configuration information for the terminal device; or
the second information indicates the first central unit user plane to send size information of downlink small data when the first central unit user plane detects arrival of the downlink small data; or
the second information comprises a small data transmission configuration of the first central unit user plane.

10. The method according to claim 9, wherein that the second information indicates the first central unit user plane to send size information of downlink small data when the first central unit user plane detects arrival of the downlink small data comprises:
if uplink small data transmission and downlink small data transmission share a radio bearer, the second information indicates the first central unit user plane to send size information of downlink small data when the first central unit user plane detects arrival of the downlink small data; or
if a radio bearer used for uplink small data transmission is different from a radio bearer used for downlink small data transmission, the second information indicates the first central unit user plane to send size information of small data when the first central unit user plane detects arrival of downlink small data, wherein the size information of the small data comprises the size information of the downlink small data.

11. The method according to claim 8, wherein
the second information is comprised in a third message, and the second information is a bearer context status change information element IE comprised in the third message, wherein a value of the bearer context status change information element IE is a first value.

12. The method according to any one of claims 8 to 11, wherein the information about the first data size is comprised in a fourth message, and the method further comprises:
mapping, based on third information, a quality of service QoS flow comprised in the PDU session to notify list for small data transmission to a radio bearer used for small data transmission, wherein the third information is comprised in the fourth message, and the third information indicates the PDU session to notify list for small data transmission; or
mapping, based on the fourth message, a QoS flow comprised in a PDU session to notify list comprised in the fourth message to a radio bearer used for small data transmission; or
mapping, based on the information about the first data size, a QoS flow comprised in a PDU session to notify list to a radio bearer used for small data transmission.

13. The method according to any one of claims 8 to 12, wherein after receiving the information about the first data size from the first central unit user plane, the method further comprises:
sending a paging message for paging a terminal device.

14. The method according to claim 13, wherein after sending the paging message, the method further comprises:
receiving, from a first distributed unit in the first access network device, a RRC request message from the terminal device; and
sending a fifth message to the first distributed unit, wherein the fifth message is used to request context setup of a radio bearer, and the radio bearer is a radio bearer of the terminal device for the downlink small data transmission.

15. The method according to claim 13, wherein sending the paging message comprises:
sending the paging message to a second access network device, wherein the paging message is used by the second access network device to page the terminal device, and the paging message comprises the information about the first data size or comprises a downlink small data transmission indication.

16. The method according to claim 15, wherein after sending the paging message to the second access network device, the method further comprises:
receiving a sixth message from the second access network device, wherein the sixth message is used to request to obtain a context of the terminal device; and
sending, to the second access network device, partial or entire context of all the radio bearers of the terminal device for small data transmission, or sending, to the second access network device, partial or entire context of the radio bearer of the terminal device for the downlink small data transmission.

17. The method according to claim 15 or 16, wherein the second access network device and the first central unit control plane unit are located in a same radio access network notification area RNA.

18. The method according to any one of claims 8 to 17, wherein the method further comprises: receiving first indication information from the first central unit user plane or a core network device, wherein the first indication information indicates to end the small data transmission, or indicates to stop data transmission.

19. The method according to any one of claims 8 to 18, wherein the first access network device is a base station, the first central unit user plane is a base station central unit user plane in the base station, and the first central unit control plane is a base station central unit control plane in the base station.

20. A communication method, applied to a first central unit user plane, wherein the method comprises:
sending first information to a first central unit control plane in a process of small data transmission between a first access network device and a terminal device, wherein the first information is information related to downlink data of the terminal device, and the first information is used by the first central unit control plane to determine whether to direct the terminal device to a RRC connected state, wherein
the first central unit control plane and the first central unit user plane are located in the first access network device.

21. The method according to claim 20, wherein the downlink data comprises first downlink small data or downlink non-small data.

22. The method according to claim 21, wherein the downlink data comprises the first downlink small data, and
the first information indicates that a data size of the first downlink small data is greater than or equal to a first threshold, wherein
the first downlink small data comprises downlink small data of all radio bearers of the terminal device for small data transmission, the first threshold is a data size threshold corresponding to the terminal device or the first threshold is a data size threshold shared by a plurality of terminal devices, and the terminal device is one of the plurality of terminal devices; or
the first downlink small data comprises downlink small data of a first radio bearer of the terminal device, the first threshold is a data size threshold corresponding to the first radio bearer, and the first radio bearer is used for small data transmission;
or
the first information indicates a data size of the first downlink small data.

23. The method according to claim 22, wherein
the first threshold is comprised in an interface setup request message or an interface setup response message, wherein the interface setup request message is used to request setup of a connection between the first central unit control plane and the first central unit user plane, the interface setup request response is used to acknowledge the setup of the connection, the first threshold is the data size threshold shared by the plurality of terminal devices, and the terminal device is one of the plurality of terminal devices; or
the first threshold is comprised in a bearer context setup request message, wherein the bearer context setup request message is used to request setup of a radio bearer context of the terminal device, and the first threshold is the data size threshold corresponding to the terminal device or the first radio bearer.

24. The method according to claim 21, wherein the downlink data comprises the downlink non-small data, and
the first information indicates arrival of the downlink non-small data, wherein the downlink non-small data comprises downlink non-small data of all radio bearers of the terminal device for non-small data, or comprises downlink non-small data of a second radio bearer of the terminal device, and the second radio bearer is used for non-small data transmission.

25. The method according to claim 24, wherein the first information is comprised in a second message, the first information comprises an identifier of at least one radio bearer of the terminal device and indicates a PDU session to notify list for small data transmission, and the at least one radio bearer is used for non-small data transmission.

26. The method according to any one of claims 20 to 25, wherein the method further comprises:
determining, based on second information, to send downlink small data size information to the first central unit control plane when detecting that downlink small data arrives; and
when detecting arrival of second downlink small data, sending information about a first data size to the first central unit control plane, wherein the first data size is a data size of the second downlink small data.

27. The method according to claim 26, wherein
the second information is comprised in a third message, and the third message is from the first central unit control plane, wherein
the second information indicates that the terminal device has a capability of supporting small data transmission; or
the second information indicates that the terminal device has a capability of supporting downlink small data transmission; or
the second information indicates that the terminal device has small data transmission configuration information; or
the second information indicates that the first central unit control plane has configured small data transmission configuration information for the terminal device; or
the second information indicates the first central unit user plane to send size information of downlink small data when the first central unit user plane detects arrival of the downlink small data; or
the second information comprises a small data transmission configuration of the first central unit user plane.

28. The method according to claim 27, wherein that the second information indicates the first central unit user plane to send size information of downlink small data when the first central unit user plane detects arrival of the downlink small data comprises:
if uplink small data transmission and downlink small data transmission share a radio bearer, the second information indicates the first central unit user plane to send size information of downlink small data when the first central unit user plane detects arrival of the downlink small data; or
if a radio bearer used for uplink small data transmission is different from a radio bearer used for downlink small data transmission, the second information indicates the first central unit user plane to send size information of small data when the first central unit user plane detects arrival of downlink small data, wherein the size information of the small data comprises the size information of the downlink small data.

29. The method according to claim 26, wherein
the second information is comprised in a third message, the third message is from the first central unit control plane, and the second information comprised in the third message is a bearer context status change IE, wherein a value of the bearer context status change IE is a first value.

30. The method according to any one of claims 26 to 29, wherein the information about the first data size is comprised in a fourth message, wherein
the fourth message further comprises third information, the third information indicates the PDU session to notify list for small data transmission, and the third information is used by the first central unit control plane to map a QoS flow of the PDU session to notify list to a radio bearer used for small data transmission; or
the fourth message further indicates the first central unit control plane to map, to a radio bearer used for small data transmission, a QoS flow comprised in a PDU session to notify list comprised in the fourth message.

31. The method according to any one of claims 26 to 30, wherein after sending the information about the first data size to the first central unit control plane, the method further comprises:
sending first indication information to the first central unit control plane, wherein the first indication information indicates to end the small data transmission.

32. The method according to any one of claims 26 to 31, wherein the first access network device is a base station, the first central unit user plane is a base station central unit user plane in the base station, and the first central unit control plane is a base station central unit control plane in the base station.

33. A communication apparatus, comprising a processor and a memory, wherein the memory is coupled to the processor, and the processor is configured to perform the method according to any one of claims 1 to 19 or is configured to perform the method according to any one of claims 20 to 32.

34. A computer-readable storage medium, wherein the computer-readable storage medium is configured to store a computer program, and when the computer program is run on a computer, the computer is caused to perform the method according to any one of claims 1 to 19 or the computer is caused to perform the method according to any one of claims 20 to 32.

35. A chip system, wherein the chip system comprises a processor and an interface, the processor is configured to invoke instructions from the interface and run the instructions, and when executing the instructions, the processor implements the method according to any one of claims 1 to 19 or implements the method according to any one of claims 20 to 32.

36. A computer program product, wherein the computer program product comprises a computer program, and when the computer program is run on a computer, the computer is caused to perform the method according to any one of claims 1 to 19 or the computer is caused to perform the method according to any one of claims 20 to 32.
